# EUROPEAN PATENT APPLICATION

(11) **EP 4 787 942 A1**
(43) Date of publication of application: **05.08.2026**
(21) Application number: 23953598.2
(22) Date of filing: 27.09.2023
(51) Int. Cl.: H04W 24/10

(54) **METHOD FOR TRIGGERING MEASUREMENT REPORTING, COMMUNICATION DEVICE, COMMUNICATION SYSTEM, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN); TAO, Xuhua, Beijing 100085 (CN)
(74) Representative: Stöckeler, Ferdinand
(86) International application number: PCT/CN2023/122353
(87) International publication number: WO 2025/065446

(57) **Abstract**

Embodiments of the present disclosure provide a method for triggering measurement reporting, a communication device, a communication system, and a storage medium. The method comprises: a terminal receives first information; the first information is used for instructing to activate or deactivate at least one first cell; and when a second cell exists in the at least one first cell, sends to a network device a measurement result of the second cell. The second cell is a cell in the first cell that satisfies two or more of the following conditions: being a second cell which is instructed by the first information to switch from a deactivated state to an activated state, the second cell being a first-type cell within a first frequency range, and a measurement result of the second cell being valid. According to the technical solution provided by embodiments of the present disclosure, instead of reporting all cells having valid measurement results, only a measurement result of a second cell having a valid measurement result is reported, so that the number of times a terminal carries out measurement reporting during an activation process of a first cell is reduced, reducing signaling overhead and facilitating energy conservation of the terminal.

## Description

### FIELD

The present disclosure relates to the field of communication technologies, and in particular, to a method for triggering measurement reporting, a communication device, a communication system, and a storage medium.

### BACKGROUND

**In** a wireless communication network, a network side may configure a plurality of serving cells for a terminal, and the serving cells may include a primary cell (PCell) and a secondary cell (SCell). The secondary cells may further include a primary secondary cell (PSCell) and other secondary cells (SCells). The other secondary cells may also be referred to as regular secondary cells.

During a communication process, a network device may activate or deactivate a secondary cell according to a communication requirement. For example, when there is no data transmission between the network device and the terminal, the network device deactivates the secondary cell; when there is a data transmission requirement or a large amount of data to be transmitted between the network device and the terminal, the network device activates the secondary cell.

### SUMMARY

**In** order to reduce an activation delay of a secondary cell, a mechanism for reporting a measurement result of the secondary cell is introduced, but this also causes frequent reporting of the measurement result of the secondary cell, resulting in large signaling overhead.

Embodiments of the present disclosure provide a method for triggering measurement reporting, a communication device, a communication system, and a storage medium.

According to a first aspect of embodiments of the present disclosure, there is provided a method for triggering measurement reporting, and the method includes:
receiving, by a terminal, first information, in which the first information is used to instruct to activate or deactivate at least one first cell;
in a case where a second cell exists in the at least one first cell, sending a measurement result of the second cell to a network device,
in which the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

According to a second aspect of embodiments of the present disclosure, there is provided a method for triggering measurement reporting, and the method includes:
sending, by a network device, first information to a terminal, in which the first information is used to instruct to activate or deactivate at least one first cell; and
receiving, by the network device, a measurement result of a second cell sent by the terminal.
in which the second cell is a cell in the first cell satisfying two or more of the following conditions:
in which the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

According to a third aspect of embodiments of the present disclosure, there is provided a terminal, and the terminal includes:
a first transceiver module configured to receive first information, and in a case where a second cell exists in the at least one first cell, send a measurement result of the second cell to a network device, in which the first information is used to instruct to activate or deactivate the at least one first cell,
in which the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

According to a fourth aspect of embodiments of the present disclosure, there is provided a network device, and the network device includes:
a second transceiver module configured to send first information to a terminal, and receive a measurement result of a second cell sent by the terminal, in which the first information is used to instruct to activate or deactivate at least one first cell,
and the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

According to a fifth aspect of embodiments of the present disclosure, there is provided a communication system, in which the communication system includes a terminal and a network device, the terminal is configured to implement the method for triggering measurement reporting according to the first aspect, and the network device is configured to implement the method for triggering measurement reporting according to the second aspect.

According to a sixth aspect of embodiments of the present disclosure, there is provided a communication device, and the communication device includes:
one or more processors,
in which the one or more processor are configured to call instructions to cause the communication device to perform the method for triggering measurement reporting according to the first aspect or the second aspect.

According to a seventh aspect of embodiments of the present disclosure, there is provided a storage medium, in which the storage medium stores instructions that, when executed on a communication device, cause the communication device to perform the method for triggering measurement reporting according to the first aspect or the second aspect.

With the technical solution provided by embodiments of the present disclosure, instead of reporting all cells having valid measurement results, only a measurement result of a second cell having a valid measurement result is reported, so that the number of times a terminal performs measurement reporting during an activation process of a first cell is reduced, reducing signaling overhead and facilitating energy conservation of the terminal.

It should be understood that the forgoing general description and the following detailed description are only illustrative and explanatory, and cannot limit embodiments of the present disclosure.

### BRIEF DESCRIPTION OF THE DRAWINGS

The accompanying drawings herein are incorporated into the specification and constitute a part of the specification. Theses accompanying drawings illustrate embodiments conform to the present disclosure and are used to explain the principles of embodiments of the present disclosure together with the specification.
FIG. 1A is a schematic diagram of an architecture of a communication system according to an illustrative embodiment.
FIG. 1B is an interaction diagram of a method for triggering SCell measurement reporting according to an illustrative embodiment.
FIG. 2A is an interaction diagram of a method for triggering measurement reporting according to an illustrative embodiment.
FIG. 2B is an interaction diagram of a method for triggering measurement reporting according to an illustrative embodiment.
FIG. 2C is an interaction diagram of a method for triggering measurement reporting according to an illustrative embodiment.
FIG. 3A is a flowchart of a method for triggering measurement reporting according to an illustrative embodiment.
FIG. 3B is a flowchart of a method for triggering measurement reporting according to an illustrative embodiment.
FIG. 3C is a flowchart of a method for triggering measurement reporting according to an illustrative embodiment.
FIG. 3D is a flowchart of a method for triggering measurement reporting according to an illustrative embodiment.
FIG. 4 is a flowchart of a method for triggering measurement reporting according to an illustrative embodiment.
FIG. 5 is an interaction diagram of a method for triggering measurement reporting according to an illustrative embodiment.
FIG. 6A is a first schematic diagram illustrating information interaction between a MAC layer and an RRC layer during an SCell activation process according to an illustrative embodiment.
FIG. 6B is a second schematic diagram illustrating information interaction between a MAC layer and an RRC layer during an SCell activation process according to an illustrative embodiment.
FIG. 6C is a third schematic diagram illustrating information interaction between a MAC layer and an RRC layer during an SCell activation process according to an illustrative embodiment.
FIG. 6D is a fourth schematic diagram illustrating information interaction between a MAC layer and an RRC layer during an SCell activation process according to an illustrative embodiment.
FIG. 6E is a fifth schematic diagram illustrating information interaction between a MAC layer and an RRC layer during an SCell activation process according to an illustrative embodiment.
FIG. 7A is a schematic block diagram of a terminal according to an illustrative embodiment.
FIG. 7B is a schematic block diagram of a network device according to an illustrative embodiment.
FIG. 8A is a schematic block diagram of a communication device 8100 according to an illustrative embodiment.
FIG. 8B is a schematic block diagram of a chip 8200 according to an illustrative embodiment.

### DETAILED DESCRIPTION OF THE DISCLOSURE

Embodiments of the present disclosure provide a method for triggering measurement reporting, a communication device, a communication system, and a storage medium.

In a first aspect, an embodiment of the present disclosure provides a method for triggering measurement reporting, and the method includes:
receiving, by a terminal, first information, in which the first information is used to instruct to activate or deactivate at least one first cell;
in a case where a second cell exists in the at least one first cell, sending a measurement result of the second cell to a network device,
in which the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

In the above embodiment, during a process of activating or deactivating the first cell by the terminal, the terminal sends the measurement result of the second cell to the network device only when it determines that the second cell simultaneously satisfying a plurality of conditions exists in the first cell; compared to a manner in which the terminal triggers measurement reporting upon receiving a first cell activation instruction, or the terminal triggers measurement reporting upon determining that a first cell with a valid measurement result exists, embodiments of the present disclosure do not report all cells with valid measurement results, but report the measurement result of the second cell with a valid measurement result, effectively reducing some unnecessary measurements, reducing the number of times the terminal performs measurement reporting, reducing signaling overhead, and facilitating energy conservation of the terminal.

In conjunction with some embodiments of the first aspect, in some embodiments, the method further includes:
determining, by a medium access control (MAC) layer of the terminal, whether the second cell exists in the first cell;
in a case where the second cell exists in the first cell, sending, by the MAC layer of the terminal, second information to a radio resource control (RRC) layer of the terminal, in which the second information indicates at least one of: the second cell exists in the first cell; the RRC layer triggers reporting of the measurement result; or an index or an index list of the second cell; and
in a case where the second cell exists in the first cell, sending the measurement result of the second cell to the network device includes:
in a case where the RRC layer of the terminal receives the second information, sending the measurement result of the second cell to the network device.

In the above embodiment, during a process of activating or deactivating the first cell by the terminal, the MAC layer of the terminal determines whether the second cell simultaneously satisfying a plurality of conditions exists in the first cell, and in a case where the second cell exists in the first cell, the MAC layer sends second information to the RRC layer to trigger the RRC layer to send the measurement result of the second cell to the network device, reducing the number of times of measurement reporting during the activation process of the first cell through effective interaction between the MAC layer and the RRC layer.

In conjunction with some embodiments of the first aspect, in some embodiments, the index of the second cell is a serving cell identity.

In the above embodiment, in a case where the MAC layer determines that the second cell exists in the first cell, it may send the second information carrying the serving cell identity of the second cell to the RRC layer, so that the RRC layer determines the second cell and sends the measurement result corresponding to the serving cell identity to the network device.

In conjunction with some embodiments of the first aspect, in some embodiments, determining, by the medium access control (MAC) layer of the terminal, whether the second cell exists in the first cell includes:
determining, by the MAC layer according to the first information, whether a third cell exists in the first cell, in which the third cell is a cell in the first cell switching from a deactivated state to an activated state;
in a case where the third cell exists in the first cell, determining, by the MAC layer, whether the first-type cell in the first frequency range exists in the third cell; and
in a case where the first-type cell exists in the third cell, determining, by the MAC layer according to a measurement result of the first cell, whether a cell with a valid measurement result exists in the first-type cell.

In the above embodiment, during a process of activating or deactivating the first cell by the terminal, the MAC layer of the terminal determines whether the third cell exists in the first cell according to the first information sent by the network device; in a case where the third cell exists in the first cell, the MAC layer determines whether the first-type cell in the first frequency range exists in the third cell; and in a case where the first-type cell exists in the third cell, determines, according to the measurement result of the first cell, whether a cell with a valid measurement result exists in the first-type cell of the third cell. In this way, by sequentially screening the first cell condition by condition, the number of cells to be screened is gradually reduced, processing efficiency is improved, and an activation delay of the first cell is reduced.

In conjunction with some embodiments of the first aspect, in some embodiments, the method further includes:
determining, by an RRC layer of the terminal, whether the second cell exists in the first cell; and
in a case where the second cell exists in the first cell, sending the measurement result of the second cell to the network device includes:
in a case where the second cell exists in the first cell, sending, by the RRC layer, the measurement result of the second cell to the network device.

In the above embodiment, during a process of activating or deactivating the first cell by the terminal, the RRC layer of the terminal determines whether the second cell exists in the first cell, so that in a case where it is determined that the second cell exists in the first cell, the RRC layer directly triggers reporting of the measurement result of the second cell; efficiency of measurement reporting is improved, and an activation delay is reduced.

In conjunction with some embodiments of the first aspect, in some embodiments, the method further includes:
sending, by the MAC layer of the terminal, the first information to the RRC layer; or
sending, by the MAC layer of the terminal, third information to the RRC layer according to the first information, in which the third information indicates a third cell, and the third cell is a cell in the first cell switching from a deactivated state to an activated state.

In the above embodiment, after receiving the first information, the MAC layer directly sends the first information to the RRC layer, and the RRC layer parses the first information and determines whether a second cell simultaneously satisfying a plurality of conditions exists in the first cell; or the MAC layer parses the received first information and sends parsed fourth information to the RRC layer, and the RRC layer determines whether a second cell simultaneously satisfying a plurality of conditions exists in the first cell; in this way, the measurement reporting process during the activation process of the first cell is implemented through effective interaction between the MAC layer and the RRC layer.

In conjunction with some embodiments of the first aspect, in some embodiments, the method further includes:
determining, by the MAC layer of the terminal according to the first information, whether a third cell exists in the first cell, in which the third cell is a cell in the first cell switching from a deactivated state to an activated state;
sending, by the MAC layer of the terminal, third information to the RRC layer of the terminal, in which the third information indicates the third cell; and
determining, by the RRC layer of the terminal, whether the second cell exists in the first cell includes:
in a case where the RRC receives the third information, determining, by the RRC layer, whether the first-type cell in the first frequency range exists in the third cell; and
in a case where the first-type cell exists in the third cell, determining, by the RRC layer, whether a cell with a valid measurement result exists in the first-type cell.

In the above embodiment, the MAC layer determines the third cell in the first cell according to the received first information, and sends the third information to the RRC layer to trigger the RRC layer to perform subsequent condition judgment in the measurement reporting process on the third cell. In this way, the MAC layer directly determines whether the third cell exists in the first cell according to the received first information, reducing the transmission of the first information between the MAC layer and the RRC layer, reducing message overhead; and in a case where the MAC layer determines that the third cell exists in the first cell, the MAC layer triggers the RRC layer to perform a subsequent measurement reporting process, which may reduce unnecessary triggering of the RRC layer and facilitate energy conservation of the terminal.

In conjunction with some embodiments of the first aspect, in some embodiments, the method further includes:
determining, by the MAC layer of the terminal, whether the first-type cell in the first frequency range exists in the first cell;
in a case where the first-type cell exists in the first cell, sending, by the MAC layer, fourth information to the RRC layer of the terminal, in which the fourth information indicates the first-type cell in the first cell; and
determining, by the RRC layer of the terminal, whether the second cell exists in the first cell includes:
determining, by the RRC layer, whether a cell activated from a deactivated state exists in the first-type cell of the first cell; and determining, by the RRC layer, whether a cell with a valid measurement result exists in the first-type cell of the first cell.

In the above embodiment, the MAC layer first determines whether the first-type cell in the first frequency range exists in the first cell, and in a case where the first-type cell in the first frequency range exists in the first cell, sends fourth information to the RRC layer to trigger the RRC layer to perform subsequent condition judgment in the measurement reporting process on the first-type cell in the first cell, so that the RRC layer determines a second cell simultaneously satisfying a plurality of conditions and directly triggers reporting of the measurement result of the second cell. In this way, the MAC layer triggers the RRC layer to perform a subsequent measurement reporting process only in a case where the first-type cell in the first frequency range exists in the first cell, which may reduce unnecessary triggering of the RRC layer and facilitate energy conservation of the terminal.

In conjunction with some embodiments of the first aspect, in some embodiments, the method further includes:
determining, by the MAC layer of the terminal according to the first information, whether a third cell exists in the first cell, in which the third cell is a cell in the first cell switching from a deactivated state to an activated state;
determining, by the MAC layer, whether the first-type cell in the first frequency range exists in the third cell;
in a case where the first-type cell exists in the third cell, sending, by the MAC layer, fifth information to the RRC layer of the terminal, in which the fifth information indicates the first-type cell in the third cell; and
determining, by the RRC layer of the terminal, whether the second cell exists in the first cell includes:
determining, by the RRC layer, whether a cell with a valid measurement result exists in the first-type cell of the third cell.

In the above embodiment, the MAC layer determines a third cell activated from a deactivated state from the first cell, and determines a first-type cell in the first frequency range from the third cell; the MAC layer informs the RRC layer of the first-type cell in the third cell through fifth information, and the RRC layer determines whether a cell with a valid measurement result exists in the first-type cell of the third cell, so that after the RRC layer determines the first-type cell with a valid measurement result in the third cell, it directly sends the measurement result of the cell to the network device to complete activation of the cell.

In conjunction with some embodiments of the first aspect, in some embodiments, the method further includes:
sending, by the MAC layer of the terminal or a physical layer of the terminal, sixth information to the RRC layer, in which the sixth information is used for the RRC layer to determine the first-type cell in the first frequency range; and/or
sending, by the MAC layer of the terminal or a physical layer of the terminal, seventh information to the RRC layer, in which the seventh information is used for the RRC layer to determine presence of a cell with a valid measurement result.

In the above embodiment, in a case where the RRC layer determines whether the second cell exists in the first cell, the MAC layer or the physical layer sends sixth information and/or seventh information to the RRC layer, so as to assist the RRC layer in performing corresponding condition judgment using the sixth information and/or the seventh information, and determine the second cell from the first cell.

In conjunction with some embodiments of the first aspect, in some embodiments, the method further includes:
receiving, by the MAC layer, a physical layer indication of the terminal,
in which the physical layer indication is used to determine at least one of:
whether the first-type cell in the first frequency range exists in the first cell or the third cell; or
whether a cell with a valid measurement result exists in the first cell or the third cell.

In the above embodiment, the MAC layer may receive a physical layer indication sent by the physical layer to determine the first-type cell in the first cell or the third cell and/or a cell with a valid measurement result in the first cell or the third cell, to improve processing efficiency when the MAC layer determines the first-type cell in the first cell or the third cell and/or a cell with a valid measurement result in the first cell or the third cell, and facilitate energy conservation of the terminal.

In conjunction with some embodiments of the first aspect, in some embodiments, the method further includes:
when sending the measurement result of the second cell to the network device, sending cell information of the second cell to the network device,
in which the cell information of the second cell includes at least one of:
frequency information of the second cell; or
a cell identity of the second cell.

In the above embodiment, while sending the measurement result of the second cell to the network device, the terminal may send the cell information of the second cell to the network device, so that the network device determines the second cell to which the measurement result belongs according to the cell information, and the network device transmits data on a component carrier corresponding to the second cell, to increase a data transmission rate.

In conjunction with some embodiments of the first aspect, in some embodiments, the first information is carried in a medium access control (MAC) control element (CE).

In the above embodiment, the existing signaling may be directly reused to transmit the first information, effectively reducing signaling overhead.

In conjunction with some embodiments of the first aspect, in some embodiments, the first frequency range includes a frequency range FR2.

In the above embodiment, by limiting the first frequency range to the frequency range FR2, the measurement result is reported for activation of the first cell belonging to the first-type cell in FR2, which may effectively reduce an activation delay of the first-type cell in FR2, and also reduce the number of times of measurement reporting by the terminal during the activation process of the first cell, reduce signaling overhead, and facilitate energy conservation of the terminal.

In a second aspect, an embodiment of the present disclosure provides a method for triggering measurement reporting, and the method includes:
sending, by a network device, first information to a terminal, in which the first information is used to instruct to activate or deactivate at least one first cell; and
receiving, by the network device, a measurement result of a second cell sent by the terminal,
in which the second cell is a cell in the first cell satisfying two or more of the following conditions:
in which the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

In the above embodiment, during an activation process of the first cell, the network device may only receive the measurement result of the second cell, and does not receive measurement results of all activated first cells, reducing the number of times of measurement reporting by the terminal and reducing signaling overhead.

In a third aspect, an embodiment of the present disclosure provides a terminal, and the terminal includes:
a first transceiver module configured to receive first information, and in a case where a second cell exists in the first cell, send a measurement result of the second cell to a network device, in which the first information is used to instruct to activate or deactivate the first cell,
and the second cell satisfies two or more of the following conditions:
the first information instructs the second cell to switch from a deactivated state to an activated state;
the second cell is a first-type cell in a first frequency range; or
the measurement result of the second cell is valid.

In a fourth aspect, an embodiment of the present disclosure provides a network device, and the network device includes:
a second transceiver module configured to send first information to a terminal, and receive a measurement result of a second cell sent by the terminal, in which the first information is used to instruct to activate or deactivate at least one first cell,
in which the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

In a fifth aspect, an embodiment of the present disclosure provides a communication system, in which the communication system includes a terminal and a network device; the terminal is configured to implement the method for triggering measurement reporting described in the optional implementation of the first aspect; the network device is configured to implement the method for triggering measurement reporting described in the optional implementation of the second aspect.

In a sixth aspect, an embodiment of the present disclosure provides a communication device, and the communication device includes:
one or more processors,
in which the one or more processors are configured to invoke instructions to cause the communication device to perform the method for triggering measurement reporting described in the optional implementation of the first aspect or the second aspect.

In a seventh aspect, an embodiment of the present disclosure provides a storage medium storing instructions that, when executed by a communication device, cause the communication device to perform the method for triggering measurement reporting described in the optional implementation of the first aspect or the second aspect.

In an eighth aspect, an embodiment of the present disclosure provides a program product that, when executed by a communication device, causes the communication device to perform the method for triggering measurement reporting described in the optional implementation of the first aspect or the second aspect.

In a ninth aspect, an embodiment of the present disclosure provides a computer program that, when run on a computer, causes the computer to perform the method for triggering measurement reporting described in the optional implementation of the first aspect or the second aspect.

It may be understood that the above terminal, communication device, communication system, storage medium, program product, and computer program are all used to perform the methods provided in embodiments of the present disclosure. Therefore, the beneficial effects they may achieve may refer to the beneficial effects in the corresponding methods, which will not be repeated here.

Embodiments of the present disclosure propose a method and apparatus for triggering measurement reporting, a communication device, a communication system, and a storage medium. In some embodiments, the method for triggering measurement reporting may be interchanged with terms such as information processing method and information transmission method, the information indicating apparatus may be interchanged with terms such as information processing apparatus and information transmission apparatus, and the communication system may be interchanged with terms such as information processing system.

Embodiments of the present disclosure are not exhaustive, but are merely illustrative of some embodiments, and do not specifically limit the protection scope of the present disclosure. In the case of no contradiction, each step in a certain embodiment may be implemented as an independent embodiment, and the steps may be arbitrarily combined. For example, a solution obtained by removing some steps in a certain embodiment may also be implemented as an independent embodiment. Moreover, the order of the steps in a certain embodiment may be arbitrarily exchanged. In addition, optional implementations in a certain embodiment may be arbitrarily combined; furthermore, the embodiments may be arbitrarily combined with each other. For example, some or all steps of different embodiments may be arbitrarily combined, and a certain embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are only for purpose of description of particular embodiments, and are not intended to limit embodiments of the present disclosure.

In embodiments of the present disclosure, unless otherwise specified, an element represented in the singular form, such as "a", "an", "the", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, the term "plurality of" refers to two or more than two.

In some embodiments, terms such as "at least one of," "one or more," "a plurality of," and "multiple" may be interchanged with each other.

In some embodiments, descriptions such as "at least one of A and B", "A and/or B", "A in one case, B in another case", "in response to one case A, in response to another case B", etc. may include the following technical solutions according to circumstances: in some embodiments, A (performing A independently of B); in some embodiments, B (performing B independently of A); in some embodiments, select from A and B for performing (A and B are selectively performed); in some embodiments, A and B (both A and B are performed). It is similar to the above when there are more branches such as A, B, C, etc.

In some embodiments, descriptions such as "A or B" may include the following technical solutions according to circumstances: in some embodiments, A (performing A independently of B); in some embodiments, B (performing B independently of A); in some embodiments, select from A and B for performing (A and B are selectively performed). It is similar to the above when there are more branches such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types may be the same or different. For another example, when the description object is "information", the "first information" and the "second information" may be the same information or different information, and the contents may be the same or different.

In some embodiments, "including A," "comprising A," "for indicating A," "carrying A," may be interpreted as directly carrying A, or may be interpreted as indirectly indicating A.

In some embodiments, terms such as "in response to," "in response to determining," "in the event of," "in a case where," "when," "if," "in a case of," and the like may be interchanged with each other.

In some embodiments, terms such as "greater than", "greater than or equal to", "not smaller than", "more than", "more than or equal to", "not less than", "higher than", "higher than or equal to", "not lower than", "above" and the like may be interchanged with each other, and terms such as "smaller than", "smaller than or equal to", "not greater than", "less than", "less than or equal to", "not more than", "lower than", "lower than or equal to", "not higher than", "below" and the like may be interchanged with each other.

In some embodiments, a device or the like may be interpreted as either physical or virtual, and the name thereof is not limited to the name described in the embodiments, and terms such as "apparatus", "equipment", "device", "circuit", "network element", "node", "function", "unit", "section", "system", "network", "chip", "chip system", "entity", and "body" may be interchanged with each other.

In some embodiments, a "network" may be interpreted as an apparatus (e.g., an access network device, a core network device, etc.) included in the network.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be interchanged with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. may be interchangeable with each other.

In some embodiments, an access network device, a core network device, or a network device may be interchangeable with a terminal. For example, each embodiment of the present disclosure may be applied to a configuration in which communication between an access network device, a core network device, or a network device and a terminal is interchangeable with communication between a plurality of terminals (for example, a device-to-device (D2D), a vehicle-to-everything (V2X), or the like). In this case, the terminal may have all or a part of the functions of the access network device. Further, terms such as "uplink" and "downlink" may be interchangeable with terms corresponding to inter-terminal communication (for example, "side"). For example, an uplink channel, a downlink channel, or the like may be interchangeable with a sidelink channel, and an uplink, a downlink, or the like may be interchangeable with a sidelink.

In some embodiments, the terminal may be interchangeable with an access network device, a core network device, or a network device. In this case, the access network device, the core network device, or the network device may have all or a part of the functions of the terminal.

In some embodiments, the acquisition of data, information, etc. may comply with laws and regulations of the country where it is located.

In some embodiments, data, information, etc., may be obtained after obtaining user consent.

In addition, each element, each row, or each column in the table of embodiments of the present disclosure may be implemented as an independent embodiment, and any combination of any element, any row, or any column may also be implemented as an independent embodiment.

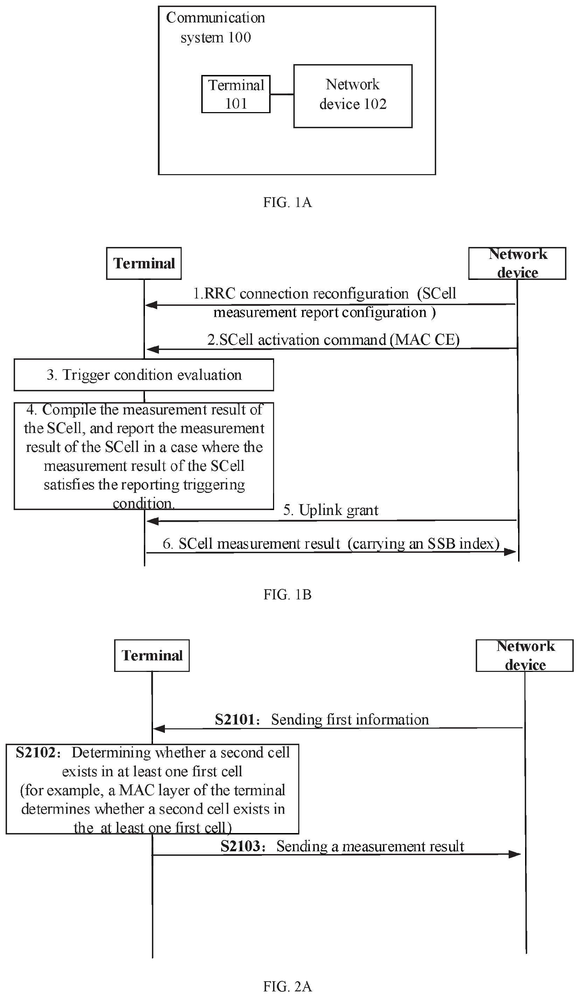

FIG. 1 is a schematic diagram of an architecture of a communication system illustrated according to an illustrative embodiment.

As illustrated in FIG. 1A, the communication system 100 includes a terminal 101 and a network device 102.

In some embodiments, the terminal 101 includes, for example, at least one of a mobile phone, a wearable device, an Internet of Things device, an automobile with a communication function, a smart car, a tablet computer, a computer with a wireless transmission and reception function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, and a wireless terminal device in a smart home, which is not limited to this.

In some embodiments, the network device 102 includes an access network device and a core network device.

In some embodiments, the access network device may be, for example, a node or device that accesses a terminal to a wireless network, and the access network device may include an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center in a 5G communication system, a base station, an open base station (RAN), a cloud base station (Cloud RAN) in a 6G communication system, a base station in other communication systems, and an access node in a Wi-Fi system, which is not limited to this.

In some embodiments, the technical solution of the present disclosure may be applied to an Open RAN architecture, and at this time, interfaces between access network devices or within access network devices according to embodiments of the present disclosure may be changed to internal interfaces of the Open RAN, and flow and information interaction between these internal interfaces may be realized by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, which is not limited to this.

In some embodiments, a core network device may be one device, including one or more network elements, or may be multiple devices or groups of devices, each including one or more network elements. Network elements may be virtual or physical. The core network includes, for example, at least one of an evolved packet core (EPC), a 5G core network (5GCN), and a next generation core (NGC).

In some embodiments, the network element is, for example, an access and mobility management function (AMF).

In some embodiments, the network element is, for example, a mobility management entity (MME).

In some embodiments, the network element is used for access and mobility management, such as registration management, connection management, and mobility management, and the name is not limited to this.

In some embodiments, the network element may be a network element independent of the core network device.

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is equally applicable to similar technical problems.

The following embodiments of the present disclosure may be applied to the communication system 100 illustrated in FIG. 1A or a part of the main body, which is not limited to this. Each body illustrated in FIG. 1A is an example, the communication system may include all or some of the bodies in FIG. 1A, or other bodies other than FIG. 1A, the number and form of the bodies are arbitrary, the connection relationship between the bodies is an example, the bodies may not be connected or connected, and the connection may be any form, including direct connection or indirect connection, wired connection or wireless connection.

Each embodiment of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new Radio (NR), future radio access (FRA), new-radio access technology (RAT), new radio (NR), new radio access (NX), future generation radio access (FX), global system for mobile communications (GSM (registered trademark) ), CDMA2000, ultra mobile broadband (UMB), IEEE 802.11 (Wi-Fi (registered trademark)), IEEE 802.16 (WiMAX (registered trademark)), IEEE 802.20, ultrawideband (UWB), Bluetooth (registered trademark), public land mobile network (PLMN) network, device-to-device (D2D) system, machine to machine (M2M) system, Internet of Things (IoT) system, vehicle-to-everything (V2X) system, systems using other communication methods, next generation systems extended based on them, and the like. In addition, a plurality of systems may be applied in combination (for example, a combination of LTE or LTE-A and 5G, or the like).

In some communication scenarios, enhanced mobile broadband (eMBB), ultra-reliable low latency communication (URLLC), and massive machine type communication (mMTC) are included. eMBB still aims at users obtaining multimedia content, services, and data, and its demand is growing very rapidly. On the other hand, since eMBB may be deployed in different scenarios, such as indoors, urban areas, rural areas, etc., its capabilities and requirements vary greatly, so it cannot be generalized and must be analyzed in detail in conjunction with specific deployment scenarios.

Typical applications of URLLC include industrial automation, power automation, remote medical surgery (operation), traffic safety assurance, etc.

Typical features of mMTC include high connection density, small data volume, delayinsensitive services, low cost and long service life of modules, etc.

Carrier aggregation (CA) is a typical method in LTE and NR to exchange bandwidth for rate, in which case there are multiple cells serving the UE. Among them, there is one and only one primary cell component (PCC), which provides RRC signaling connection, non-access stratum (NAS) functions, security, etc. The physical uplink control channel (PUCCH) exists on the PCC and only on the PCC. The secondary cell component (SCC) only provides additional radio resources.

The PCC and SCC are collectively referred to as serving cells. In some embodiments, up to 5 aggregated carriers are supported, i.e., the maximum bandwidth after aggregation is 100 MHz, and the aggregated carriers belong to the same base station. All aggregated carriers use the same cell radio network temporary identity (C-RNTI), and the base station ensures that the C-RNTI does not conflict in the cell where each carrier is located.

In NR carrier aggregation, the aggregated cells may be cells in frequency range 1 (FR1) or cells in frequency range 2 (FR2). The definitions of FR1 and FR2 are illustrated in Table 1.

**Table 1**

| Frequency range name | | Corresponding frequency range |
|---|---|---|
| FR1 | | 410 MHz - 7125 MHz |
| FR2 | FR2-1 | 24250 MHz - 52600 MHz |
| | FR2-2 | 52600 MHz - 71000 MHz |

In some embodiments, in order to reduce the FR2 SCell activation delay, a networktriggered report (of L3 measurement results) may be introduced during the activation of an unknown FR2 SCell. As illustrated in FIG. 1B, FIG. 1B is an interaction diagram of a method for triggering SCell measurement reporting according to an illustrative implementation embodiment. The L3 SCell measurement report is triggered by an SCell activation MAC CE. In the figure, the RRC connection reconfiguration may be a message for configuring candidate secondary cells.

The MAC CE used for SCell activation is a command at the MAC layer, while the measurement report is triggered by L3. The L3 layer reports all secondary cells with valid measurement results to the network device, but in reality, some secondary cells, even if their measurement results are valid, are not the cells the terminal wants to activate, thus leading to invalid reporting of measurement results, which causes the problem of large signaling overhead.

In some embodiments, if the report type (reportType) is set to report on activation (reportOnActivation), and the secondary cell is activated by a MAC CE as agreed in the protocol, and the measurement requirement agreed in the protocol is satisfied: the measurement reporting procedure is initiated.

In some embodiments, the measurement requirement agreed in the protocol includes:
including a measurement report entry in the measurement report list (VarMeasReportList) for this measurement identity (measId); and
setting the number of measurement reports sent (numberOfReportsSent) defined for this measurement identity (measId) in the measurement report list (VarMeasReportList) to 0.

In some embodiments, the determination conditions for a second-type cell are as follows:
a cell for which a valid measurement result is sent to the network device within a period of time before receiving a handover command;
a cell for which an SSB is detected by the terminal within a period of time before receiving a handover command; or
a cell for which an SSB is detected by the terminal within a period of time before receiving a handover command and within an allowed handover delay time for cell handover.

The second-type cell here is a non-first-type cell. That is, in some embodiments, a cell that does not satisfy the above conditions may be considered a first-type cell.

The period of time before receiving the handover command may be: within a specified time such as 5 seconds before receiving the handover command.

In some embodiments, upon receiving a MAC CE for activating an SCell, the terminal triggers measurement reporting for all secondary cells with valid measurement results. However, some secondary cells, even if their measurement results are valid, are not the cells the terminal wants to activate, thus leading to invalid reporting of measurement results, resulting in large signaling overhead. Moreover, the MAC CE for activating an SCell is a command at the MAC layer, while the reporting of the measurement report is triggered by the RRC layer. During the SCell activation process, the information processing procedure between the MAC layer and the RRC layer is unclear.

FIG. 2A is an interaction diagram of a method for triggering measurement reporting according to an illustrative embodiment. As illustrated in FIG. 2A, an embodiment of the present disclosure relates to a method for triggering measurement reporting, used in a communication system 100, and the method includes the following steps:

Step S2101: a network device sends first information to a terminal.

In some embodiments, the terminal receives the first information sent by the network device.

In some embodiments, the terminal may be a terminal supporting dual connectivity, multiconnectivity, or carrier aggregation.

In some embodiments, the network device may be an access network device corresponding to a serving cell or a source cell to which the terminal is currently connected.

In some embodiments, the network device may be an access network device corresponding to a primary cell or a primary cell group of the terminal.

In some embodiments, the network device may be an access network device corresponding to a primary secondary cell or a secondary cell group of the terminal.

In some embodiments, the first information is used to activate or deactivate at least one first cell.

In some embodiments, the first cell is a candidate secondary cell.

In some scenarios, the candidate secondary cell may also be a secondary cell.

In some embodiments, the first information may be a message for configuring the candidate secondary cell.

It is worth noting that activating a first cell may be understood as the terminal accessing the first cell instructed to be activated by the first information, i.e., the first cell may serve as a serving cell of the terminal, so as to use the first cell for data transmission. Deactivating a first cell may be understood as the terminal releasing a connection with the first cell instructed to be deactivated by the first information, so as not to use the first cell for data transmission.

In some embodiments, the first information may be a first cell activation instruction.

In some embodiments, the network device may send the first information to the terminal according to the traffic volume of downlink services, to dynamically activate or deactivate one or more first cells.

It may be understood that when the network device detects the arrival of a large amount of downlink service traffic, the network device may send the first information to the terminal to activate one or more first cells, increasing the data rate of the terminal. When the downlink service traffic is low, the network device may send the first information to the terminal to deactivate one or more first cells, saving power of the terminal.

In some embodiments, upon receiving the first information, the terminal activates or deactivates one or more first cells according to the first information.

It should be noted that the terminal may dynamically activate or deactivate one or more first cells under the control of the network device to adapt to data bursts between the terminal and the network device, achieving high data throughput.

In some embodiments, the first information may include a bitmap; in which each bit in the bitmap may map to a first cell; different bit values of each bit are used to instruct to activate or deactivate the first cell corresponding to the bit.

In some embodiments, the first information may be carried in a medium access control (MAC) control element (CE).

It may be understood that the first information may be carried in existing signaling, reducing information overhead.

After receiving the first information, the terminal may perform an activation process of the first cell to activate or deactivate the first cell indicated by the first information. The activation process of the first cell includes a series of operations, which may therefore cause a first cell activation delay. For example, the series of operations may include parsing the MAC CE to obtain a first cell activation instruction, preparing (or configuring) hardware and software (e.g., protocol stack software application, radio frequency (RF) module tuning) for reception and transmission on the first cell, automatic gain control (AGC) tuning and time-frequency synchronization on the first cell, etc.

It is worth noting that in order to reduce the waiting time for burst downlink services sent from the network device to the terminal, it is necessary to reduce the activation delay of the first cell; in some embodiments, in order to reduce the activation delay of the first cell, reporting of the measurement result may be introduced during the activation process of the first cell.

Step S2102: the terminal determines whether a second cell exists in at least one first cell.

In some embodiments, a medium access control (MAC) layer of the terminal determines whether a second cell exists in the at least one first cell.

In some embodiments, the second cell is a cell in the first cell satisfying two or more of the following conditions:
a first condition: the first information instructs the second cell to switch from a deactivated state to an activated state;
a second condition: the second cell is a first-type cell in a first frequency range; and
a third condition: the measurement result of the second cell is valid.

It is worth noting that the MAC layer of the terminal may determine whether a cell simultaneously satisfying the first condition, the second condition, and the third condition, i.e., the second cell, exists in the first cell.

In some embodiments, the first-type cell is a non-second-type cell, and the second-type cell satisfies the following conditions:
a valid measurement result of the cell is sent to the network device within a preset time period before the terminal receives the first information;
a synchronization reference signal of the cell may be detected by the terminal within a preset time period before the terminal receives the first information; and
a synchronization reference signal of the cell may be detected by the terminal within a preset time period before the terminal receives the first information and within a handover delay time allowed for cell handover.

In some embodiments, the first-type cell may be an unknown cell.

In some embodiments, the first frequency range may be a frequency range corresponding to FR2.

It should be noted that in the 5th Generation (5G) mobile communication system, frequency bands are divided into two different frequency ranges, namely FR1 and FR2. The frequency ranges corresponding to FR1 and FR2 may be found in Table 1.

In some embodiments, the measurement result may be a Layer 1 (L1) measurement result.

In some embodiments, the measurement result may be a beam measurement result.

In some embodiments, the measurement result may include at least one of: L1-reference signal received power (RSRP); L1-signal to interference plus noise ratio (SINR); channel quality indicator (CQI); precoding matrix indicator (PMI); rank indicator (RI); and channel-state information-reference-signal (CSI-RS) resource indicator (CRI).

In some embodiments, the measurement result may be a Layer 3 (L3) measurement result.

In some embodiments, the measurement result may be a channel state information (CSI) measurement result.

In some embodiments, the measurement result may include at least one of: L3-RSRP; and SINR of a synchronization signal.

In some embodiments, a valid measurement result may be a measurement result that meets measurement requirements.

In some embodiments, a valid measurement result is a measurement result that meets the measurement requirements specified in TS 38.133. It is worth noting that the activation process of the first cell starts with the network device sending the first information to the terminal and ends with the terminal sending the measurement result to the network device. To speed up the activation process of the first cell, i.e., to reduce the activation delay of the first cell, after receiving the first information, the terminal may determine whether the first cell requested to be activated by the first information is a second cell; if the first cell requested to be activated by the first information is not a second cell, i.e., the first cell requested to be activated by the first information is a known cell; since the terminal has already reported the measurement result for the known cell, in order to reduce unnecessary reporting of measurement results, the terminal may not send the measurement result to the network device, reducing air interface signaling and reducing power consumption of the terminal.

In some embodiments, the MAC layer may determine whether a third cell exists in the first cell.

In some embodiments, the third cell is a cell in the first cell switching from a deactivated state to an activated state.

In some embodiments, the MAC layer may determine, according to the first information, whether a third cell exists in the first cell.

It may be understood that the first information is used to activate or deactivate one or more first cells; after receiving the first information, the MAC layer may determine, according to the first information, the third cell activated from a deactivated state.

In some embodiments, the MAC layer determines whether a first-type cell in the first frequency range exists in the first cell.

In some embodiments, the MAC layer determines whether a cell with a valid measurement result exists in the first cell.

In some embodiments, the MAC layer determines, according to a measurement result of the first cell, whether a cell with a valid measurement result exists in the first cell.

It is worth noting that the MAC layer may respectively determine two or more of the third cell in the first cell, the first-type cell in the first cell, and the cell with a valid measurement result in the first cell, and take an intersection of the determined cells to determine whether the second cell exists in the first cell.

In some embodiments, in a case where the MAC layer determines that the third cell exists in the first cell, the MAC layer determines whether the first-type cell in the first frequency range exists in the third cell; in a case where the MAC layer determines that the first-type cell exists in the third cell, the MAC layer determines whether a cell with a valid measurement result exists in the first-type cell of the third cell.

In some embodiments, in a case where the MAC layer determines that the third cell exists in the first cell, the MAC layer determines whether a cell with a valid measurement result exists in the third cell; in a case where the MAC layer determines that a cell with a valid measurement result exists in the third cell, the MAC layer determines whether a first-type cell in the first frequency range exists in the cell with a valid measurement result.

It should be noted that in the process of determining the second cell, the MAC layer may sequentially perform condition judgments on the first cell according to the three conditions to determine the second cell in the first cell; the execution order of the three conditions may be arbitrarily adjusted, and embodiments of the present disclosure do not limit this.

In some embodiments, the MAC layer may receive a physical layer indication of the terminal.

In some embodiments, the physical layer indication is used to determine at least one of:
whether the first-type cell in the first frequency range exists in the first cell or the third cell; and
whether a cell with a valid measurement result exists in the first cell or the third cell.

The physical layer of the terminal may send a physical layer indication to the MAC layer, so that the MAC layer determines, according to the physical layer indication, a cell with a valid measurement result in the first cell or the third cell, and/or a first-type cell in the first cell or the third cell.

In some embodiments, the MAC layer of the terminal sends second information to an RRC layer of the terminal.

In some embodiments, in a case where the second cell exists in the first cell, the MAC layer of the terminal sends second information to the RRC layer of the terminal.

In some embodiments, the second information indicates at least one of:
the second cell exists in the first cell;
the RRC layer triggers reporting of the measurement result; and
an index or an index list of the second cell.

It may be understood that since the reporting of the measurement result is triggered by the RRC layer of the terminal, when the MAC layer of the terminal determines that the second cell exists in the first cell, it may send the second information to the RRC layer to trigger subsequent processing by the RRC layer.

In some embodiments, the second information may include one or more indication bits, and different bit values of the indication bits are used to indicate whether the second cell exists in the first cell.

In some embodiments, the second information may include one or more information fields, and the information fields are used to carry an index or an index list of the second cell.

In some embodiments, the index of the second cell may be a serving cell identity.

Step S2103: the terminal sends a measurement result to the network device.

In some embodiments, in a case where the second cell exists in the first cell, the terminal sends the measurement result to the network device.

In some embodiments, in a case where the second cell exists in the first cell, the terminal sends the measurement result of the second cell to the network device.

In some embodiments, in a case where the second cell exists in the first cell, a radio resource control (RRC) layer of the terminal sends the measurement result of the second cell to the network device.

In some embodiments, when the RRC layer receives the second information and/or third information sent by the MAC layer, it sends the measurement result of the second cell to the network device.

It should be noted that the reported measurement result may be used by the network device for radio resource management, specifically, for scheduling radio resources for terminal communication, etc. Typically, the network device only schedules radio resources of a serving cell to the terminal for wireless communication.

In some embodiments, when sending the measurement result of the second cell to the network device, cell information of the second cell is sent to the network device.

In some embodiments, the cell information of the second cell includes at least one of:
frequency information of the second cell; and
a cell identity of the second cell.

In some embodiments, the frequency information of the second cell may be an absolute radio frequency channel number (ARFCN).

In some embodiments, the term "information" may be interchanged with terms such as "message", "signal", "signaling", "report", "configuration", "indication", "instruction", "command", "channel", "parameter", "field", and "data".

In some embodiments, the term "sending" may be interchanged with terms such as "transmitting", "reporting", and "communicating".

The method for triggering measurement reporting involved in embodiments of the present disclosure may include at least one of steps S2101 to S2103. For example, steps S2101 and S2102 may be implemented as independent embodiments, and step S2101 may be implemented as an independent embodiment, but is not limited to this.

In some embodiments, step S2103 is optional, and one or more of these steps may be omitted or substituted in different embodiments. It may be understood that if the terminal determines that the second cell does not exist in the first cell, it may not send the measurement result to the network device.

In some embodiments, steps S2102 and S2103 are optional, and one or more of these steps may be omitted or substituted in different embodiments. It may be understood that in a case where the first information sent by the network device instructs to deactivate the first cell, the terminal may directly deactivate the first cell, without determining whether the second cell exists in the first cell, and without sending the measurement result to the network device.

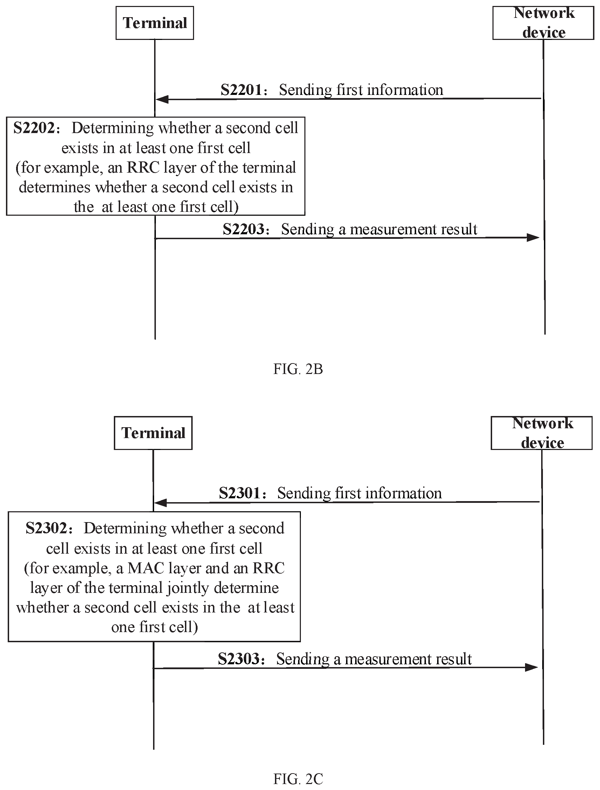

FIG. 2B is an interaction diagram of a method for triggering measurement reporting according to an illustrative embodiment. As illustrated in FIG. 2B, an embodiment of the present disclosure relates to a method for triggering measurement reporting, used in a communication system 100, and the method includes:

Step S2201: a network device sends first information to a terminal.

In some embodiments, optional implementations of step S2201 may refer to optional implementations of step S2101 inFIG. 2A and other related parts in the embodiment involvingFIG. 2A, which will not be repeated here.

Step S2202: the terminal determines whether a second cell exists in at least one first cell.

In some embodiments, an RRC layer of the terminal determines whether a second cell exists in the at least one first cell.

In some embodiments, the second cell is a cell in the first cell satisfying two or more of the following conditions:
a first condition: the first information instructs the second cell to switch from a deactivated state to an activated state;
a second condition: the second cell is a first-type cell in a first frequency range; and
a third condition: the measurement result of the second cell is valid.

It is worth noting that the RRC layer of the terminal may determine whether a cell simultaneously satisfying the first condition, the second condition, and the third condition, i.e., the second cell, exists in the first cell.

In some embodiments, the first-type cell is a non-second-type cell, and the second-type cell satisfies the following conditions:
a valid measurement result of the second-type cell is sent to the network device within a preset time period before the terminal receives the first information;
a synchronization reference signal of the second-type cell may be detected by the terminal within a preset time period before the terminal receives the first information; and
a synchronization reference signal of the second-type cell may be detected by the terminal within a preset time period before the terminal receives the first information and within a handover delay time allowed for cell handover.

In some embodiments, the first-type cell may be an unknown cell.

In some embodiments, the first frequency range may be a frequency range corresponding to FR2.

It should be noted that in the 5th Generation (5G) mobile communication system, frequency bands are divided into two different frequency ranges, namely FR1 and FR2. The frequency ranges corresponding to FR1 and FR2 may be found in Table 1.

In some embodiments, the measurement result may be a Layer 1 (L1) measurement result.

In some embodiments, the measurement result may be a beam measurement result.

In some embodiments, the measurement result may include at least one of: L1-reference signal received power (RSRP); L1-signal to interference plus noise ratio (SINR); channel quality indicator (CQI); precoding matrix indicator (PMI); rank indicator (RI); and channel-state information-reference-signal (CSI-RS) resource indicator (CRI).

In some embodiments, the measurement result may be a Layer 3 (L3) measurement result.

In some embodiments, the measurement result may be a channel state information (CSI) measurement result.

In some embodiments, the measurement result may include at least one of: L3-RSRP, or SINR of a synchronization signal.

In some embodiments, a valid measurement result may be a measurement result that meets measurement requirements.

In some embodiments, a valid measurement result is a measurement result that meets the measurement requirements specified in TS 38.133. It is worth noting that the activation process of the first cell starts with the network device sending the first information to the terminal and ends with the terminal sending the measurement result to the network device. To speed up the activation process of the first cell, i.e., to reduce the activation delay of the first cell, after receiving the first information, the terminal may determine whether the first cell requested to be activated by the first information is a second cell; if the first cell requested to be activated by the first information is not a second cell, i.e., the first cell requested to be activated by the first information is a known cell; since the terminal has already reported the measurement result for the known cell, in order to reduce unnecessary reporting of measurement results, the terminal may not send the measurement result to the network device, reducing air interface signaling and reducing power consumption of the terminal.

In some embodiments, the RRC layer may determine whether a third cell exists in the first cell.

In some embodiments, the third cell is a cell in the first cell switching from a deactivated state to an activated state.

In some embodiments, the MAC layer sends the first information to the RRC layer.

It may be understood that the first information is used to activate or deactivate the first cell. After receiving the first information, the MAC layer may send the first information to the RRC layer, so that the RRC layer determines, according to the first information, whether a third cell exists in the first cell.

It is worth noting that after receiving the first information, the MAC layer may directly send the first information to the RRC layer, and the RRC layer parses the first information to determine whether a third cell exists in the first cell.

In some embodiments, the MAC layer of the terminal sends third information to the RRC layer according to the first information.

In some embodiments, the third information is used to indicate the third cell.

It may be understood that after receiving the first information, the MAC layer may first parse the first information to determine whether a third cell exists in the first cell; and by sending the third information to the RRC layer, it informs the RRC layer of the third cell activated from an activated state.

In some embodiments, the third information may include a bitmap, and the bitmap is used to indicate the third cell.

Each bit in the bitmap may map to a first cell, and different bit values of each bit indicate whether the first cell corresponding to the bit is a third cell.

In some embodiments, the first information or the third information is used for the RRC layer to determine whether a third cell exists in the first cell.

In some embodiments, the RRC layer may determine whether a first-type cell in the first frequency range exists in the first cell.

In some embodiments, the RRC layer may determine whether a cell with a valid measurement result exists in the first cell.

It is worth noting that the RRC layer may respectively determine two or more of the third cell in the first cell, the first-type cell in the first cell, and the cell with a valid measurement result in the first cell, and take an intersection of the determined cells to determine whether the second cell exists in the first cell.

In some embodiments, in a case where the RRC layer determines that the third cell exists in the first cell, the RRC layer may determine whether the first-type cell in the first frequency range exists in the third cell; in a case where the RRC layer determines that the first-type cell exists in the third cell, the RRC layer determines whether a cell with a valid measurement result exists in the first-type cell of the third cell.

In some embodiments, in a case where the RRC layer determines that the third cell exists in the first cell, the RRC layer determines whether a cell with a valid measurement result exists in the third cell; in a case where the RRC layer determines that a cell with a valid measurement result exists in the third cell, the RRC layer determines whether a first-type cell in the first frequency range exists in the cell with a valid measurement result.

It should be noted that in the process of determining the second cell, the RRC layer may sequentially perform condition judgments on the first cell according to the three conditions to determine the second cell in the first cell; the execution order of the three conditions may be arbitrarily adjusted, and embodiments of the present disclosure do not limit this.

In some embodiments, the method further includes:
sending, by the MAC layer of the terminal or a physical layer of the terminal, sixth information to the RRC layer; and/or
sending, by the MAC layer of the terminal or a physical layer of the terminal, seventh information to the RRC layer.

In some embodiments, the sixth information is used for the RRC layer to determine whether a first-type cell in the first frequency range exists.

In some embodiments, the seventh information is used for the RRC layer to determine whether a cell with a valid measurement result exists.

In some embodiments, the sixth information is used for the RRC layer to determine whether a first-type cell in the first frequency range exists in the first cell or the third cell.

In some embodiments, the seventh information is used for the RRC layer to determine whether a cell with a valid measurement result exists in the first-type cell of the first cell or the third cell.

It is worth noting that the sixth information and the seventh information may be auxiliary information to assist the RRC layer in making a judgment. In the process where the RRC layer determines whether a cell simultaneously satisfying the second condition and the third condition exists in the third cell, the MAC layer or the physical layer sends the sixth information and/or the seventh information to the RRC layer, so that the RRC layer may determine, according to the sixth information and/or the seventh information, whether the second cell exists in the first cell.

Step S2203: the terminal sends a measurement result to the network device.

In some embodiments, in a case where the second cell exists in the first cell, the terminal sends the measurement result to the network device.

In some embodiments, in a case where the second cell exists in the first cell, the terminal sends the measurement result of the second cell to the network device.

In some embodiments, in a case where the second cell exists in the first cell, a radio resource control (RRC) layer of the terminal sends the measurement result of the second cell to the network device.

In some embodiments, when the RRC layer determines that the second cell exists in the first cell, the RRC layer sends the measurement result of the second cell to the network device.

It should be noted that the reported measurement result may be used by the network device for radio resource management, specifically, for scheduling radio resources for terminal communication, etc. Typically, the network device only schedules radio resources of a serving cell to the terminal for wireless communication.

In some embodiments, when sending the measurement result of the second cell to the network device, cell information of the second cell is sent to the network device.

In some embodiments, the cell information of the second cell includes at least one of:
frequency information of the second cell; and
a cell identity of the second cell.

In some embodiments, the frequency information of the second cell may be an absolute radio frequency channel number (ARFCN).

The method for triggering measurement reporting involved in embodiments of the present disclosure may include at least one of steps S2201 to S2203. For example, steps S2201 and S2202 may be implemented as independent embodiments, and step S2201 may be implemented as an independent embodiment, but is not limited to this.

In some embodiments, step S2203 is optional, and one or more of these steps may be omitted or substituted in different embodiments. It may be understood that if the terminal determines that the second cell does not exist in the first cell, it may not send the measurement result to the network device.

In some embodiments, steps S2202 and S2203 are optional, and one or more of these steps may be omitted or substituted in different embodiments. It may be understood that in a case where the first information sent by the network device instructs to deactivate the first cell, the terminal may directly deactivate the first cell, without determining whether the second cell exists in the first cell, and without sending the measurement result to the network device.

FIG. 2C is an interaction diagram of a method for triggering measurement reporting according to an illustrative embodiment. As illustrated in FIG. 2C, an embodiment of the present disclosure relates to a method for triggering measurement reporting, used in a communication system 100, and the method includes the following steps:

Step S2301: a network device sends first information to a terminal.

In some embodiments, optional implementations of step S2301 may refer to optional implementations of step S2101 inFIG. 2A and other related parts in the embodiment involving FIG. 2A, which will not be repeated here.

Step S2302: the terminal determines whether a second cell exists in at least one first cell.

In some embodiments, a MAC layer and an RRC layer of the terminal jointly determine whether a second cell exists in the at least one first cell.

In some embodiments, the second cell is a cell in the first cell satisfying two or more of the following conditions:
a first condition: the first information instructs the second cell to switch from a deactivated state to an activated state;
a second condition: the second cell is a first-type cell in a first frequency range; and
a third condition: the measurement result of the second cell is valid.

In some embodiments, the first-type cell is a non-second-type cell, and the second-type cell satisfies the following conditions:
a valid measurement result of the second-type cell is sent to the network device within a preset time period before the terminal receives the first information;
a synchronization reference signal of the second-type cell may be detected by the terminal within a preset time period before the terminal receives the first information; and
a synchronization reference signal of the second-type cell may be detected by the terminal within a preset time period before the terminal receives the first information and within a handover delay time allowed for cell handover.

In some embodiments, the first-type cell may be an unknown cell.

In some embodiments, the first frequency range may be a frequency range corresponding to FR2.

It should be noted that in the 5th Generation (5G) mobile communication system, frequency bands are divided into two different frequency ranges, namely FR1 and FR2. The frequency ranges corresponding to FR1 and FR2 may be found in Table 1.

In some embodiments, the measurement result may be a Layer 1 (L1) measurement result.

In some embodiments, the measurement result may be a beam measurement result.

In some embodiments, the measurement result may include at least one of: L1-reference signal received power (RSRP); L1-signal to interference plus noise ratio (SINR); channel quality indicator (CQI); precoding matrix indicator (PMI); rank indicator (RI); or channel-state information-reference-signal (CSI-RS) resource indicator (CRI).

In some embodiments, the measurement result may be a Layer 3 (L3) measurement result.

In some embodiments, the measurement result may be a channel state information (CSI) measurement result.

In some embodiments, the measurement result may include at least one of: L3-RSRP, or SINR of a synchronization signal.

In some embodiments, a valid measurement result may be a measurement result that meets measurement requirements.

In some embodiments, a valid measurement result is a measurement result that meets the measurement requirements specified in TS 38.133.

It is worth noting that the activation process of the first cell starts with the network device sending the first information to the terminal and ends with the terminal sending the measurement result to the network device. To speed up the activation process of the first cell, i.e., to reduce the activation delay of the first cell, after receiving the first information, the terminal may determine whether the first cell requested to be activated by the first information is a second cell; if the first cell requested to be activated by the first information is not a second cell, i.e., the first cell requested to be activated by the first information is a known cell; since the terminal has already reported the measurement result for the known cell, in order to reduce unnecessary reporting of measurement results, the terminal may not send the measurement result to the network device, reducing air interface signaling and reducing power consumption of the terminal.

The joint determination by the MAC layer and the RRC layer of the terminal of whether the second cell exists in the first cell may have multiple implementations. Several optional embodiments are provided below.

### Optional Embodiment 1:

In some embodiments, the MAC layer of the terminal determines whether a third cell exists in the first cell; the RRC layer determines whether a first-type cell in the first frequency range exists in the third cell, and the RRC layer determines whether a cell with a valid measurement result exists in the third cell.

It is worth noting that the MAC layer of the terminal may determine whether a cell satisfying the first condition, i.e., the third cell, exists in the first cell. The RRC layer of the terminal determines whether a cell simultaneously satisfying the second condition and the third condition exists in the third cell.

In some embodiments, the third cell is a cell in the first cell switching from a deactivated state to an activated state.

In some embodiments, the MAC layer of the terminal determines, according to the first information, whether a third cell exists in the first cell.

It may be understood that the first information is used to activate or deactivate one or more first cells; after receiving the first information, the MAC layer may determine, according to the first information, the third cell activated from a deactivated state.

In some embodiments, the method further includes:
sending, by the MAC layer, third information to the RRC layer.

In some embodiments, in a case where the MAC layer determines that the third cell exists in the at least one first cell, the MAC layer sends the third information to the RRC layer.

In some embodiments, the third information is used to indicate at least one of:
the third cell exists in the first cell;
the RRC layer triggers reporting of the measurement result; or
an index or an index list of the third cell.

It may be understood that since the reporting of the measurement result is triggered by the RRC layer of the terminal, when the MAC layer of the terminal determines that the third cell exists in the first cell, it may send the third information to the RRC layer to trigger subsequent processing by the RRC layer.

In some embodiments, when the RRC layer of the terminal receives the third information, the RRC layer may determine whether a first-type cell in the first frequency range exists in the third cell; and the RRC layer determines whether a cell with a valid measurement result exists in the third cell.

In some embodiments, the method further includes:
sending, by the MAC layer of the terminal or a physical layer of the terminal, sixth information to the RRC layer; and/or sending, by the MAC layer of the terminal or a physical layer of the terminal, seventh information to the RRC layer.

In some embodiments, the sixth information is used for the RRC layer to determine whether a first-type cell in the first frequency range exists.

In some embodiments, the seventh information is used for the RRC layer to determine whether a cell with a valid measurement result exists.

In some embodiments, the sixth information is used for the RRC layer to determine whether a first-type cell in the first frequency range exists in the third cell.

In some embodiments, the seventh information is used for the RRC layer to determine whether a cell with a valid measurement result exists in the first-type cell of the third cell.

It is worth noting that the sixth information and the seventh information may be auxiliary information to assist the RRC layer in making a judgment. In the process where the RRC layer determines whether a cell simultaneously satisfying the second condition and the third condition exists in the third cell, the MAC layer or the physical layer sends the sixth information and/or the seventh information to the RRC layer, so that the RRC layer may determine, according to the sixth information and/or the seventh information, whether the second cell exists in the third cell.

### Optional Embodiment 2:

In some embodiments, the MAC layer of the terminal determines whether a third cell exists in the first cell, and the MAC layer determines whether a first-type cell in the first frequency range exists in the third cell; and the RRC layer of the terminal determines whether a cell with a valid measurement result exists in the first-type cell of the third cell.

It is worth noting that the MAC layer of the terminal may determine whether a cell simultaneously satisfying the first condition and the second condition exists in the first cell. The RRC layer of the terminal determines whether a cell satisfying the third condition exists in the cell simultaneously satisfying the first condition and the second condition.

In some embodiments, the third cell is a cell in the first cell switching from a deactivated state to an activated state.

In some embodiments, the MAC layer of the terminal determines, according to the first information, whether a third cell exists in the first cell.

It may be understood that the first information is used to activate or deactivate one or more first cells; after receiving the first information, the MAC layer may determine, according to the first information, the third cell activated from a deactivated state.

In some embodiments, the MAC layer of the terminal determines whether a cell in the first frequency range exists in the first cell.

It is worth noting that the MAC layer may respectively determine the third cell in the first cell and the first-type cell in the first cell, and take an intersection of the determined cells to determine the cell simultaneously satisfying the first condition and the second condition.

In some embodiments, the MAC layer of the terminal may first determine whether a third cell exists in the first cell; in a case where the third cell exists in the first cell, the MAC layer determines whether a first-type cell in the first frequency range exists in the third cell.

In other embodiments, the MAC layer of the terminal may first determine whether a first-type cell in the first frequency range exists in the first cell; in a case where the first-type cell exists in the first cell, the MAC layer determines whether a cell activated from a deactivated state exists in the first-type cell of the first cell.

In some embodiments, the MAC layer may receive a physical layer indication of the terminal.

In some embodiments, the physical layer indication is used to determine whether a first-type cell in the first frequency range exists in the third cell.

In some embodiments, the method further includes:
sending, by the MAC layer, fifth information to the RRC layer.

In some embodiments, in a case where the first-type cell exists in the third cell, the MAC layer sends fifth information to the RRC layer.

In some embodiments, the fifth information indicates the first-type cell in the third cell.

In some embodiments, the fifth information is further used to indicate at least one of:
a first-type cell in the first frequency range exists in the third cell;
the RRC layer triggers reporting of the measurement result; and
an index or an index list of the first-type cell in the third cell.

It may be understood that when the MAC layer determines that a first-type cell in the first frequency range exists in the third cell, it may send fifth information to the RRC layer to inform the RRC layer of the first-type cell in the third cell, so that the RRC layer determines whether a cell satisfying the third condition exists in the first-type cell of the third cell.

In some embodiments, when the RRC layer of the terminal receives the fifth information, the RRC layer determines whether a cell with a valid measurement result exists in the first-type cell of the third cell.

In some embodiments, the method further includes:

sending, by the MAC layer of the terminal or a physical layer of the terminal, seventh information to the RRC layer.

In some embodiments, the seventh information is used for the RRC layer to determine whether a cell with a valid measurement result exists.

In some embodiments, the seventh information is used for the RRC layer to determine whether a cell with a valid measurement result exists in the first-type cell of the third cell.

It is worth noting that the seventh information may be auxiliary information to assist the RRC layer in making a judgment. In the process where the RRC layer determines whether a cell satisfying the third condition exists in the first-type cell of the third cell, the MAC layer or the physical layer sends the seventh information to the RRC layer, so that the RRC layer may determine, according to the seventh information, a cell with a valid measurement result in the first-type cell of the third cell.

### Optional Embodiment 3:

In some embodiments, the MAC layer of the terminal determines whether a first-type cell in the first frequency range exists in the first cell; the RRC layer of the terminal determines whether a cell activated from a deactivated state exists in the first-type cell of the first cell, and the RRC layer determines whether a cell with a valid measurement result exists in the first-type cell of the first cell.

It is worth noting that the MAC layer of the terminal may determine whether a cell satisfying the second condition exists in the first cell. The RRC layer of the terminal determines whether a cell simultaneously satisfying the first condition and the third condition exists in the cell satisfying the second condition.

In some embodiments, the MAC layer may receive a physical layer indication of the terminal.

In some embodiments, the physical layer indication is used to determine whether a first-type cell in the first frequency range exists in the first cell.

In some embodiments, the method further includes:
sending, by the MAC layer, fourth information to the RRC layer.

In some embodiments, in a case where the first-type cell in the first frequency range exists in the first cell, the MAC layer sends fourth information to the RRC layer.

In some embodiments, the fourth information indicates the first-type cell in the first cell.

In some embodiments, the fourth information is further used to indicate at least one of:
a first-type cell in the first frequency range exists in the first cell;
the RRC layer triggers reporting of the measurement result; and
an index or an index list of the first-type cell in the first cell.

It may be understood that when the MAC layer determines that a first-type cell in the first frequency range exists in the first cell, it may send fourth information to the RRC layer to inform the RRC layer of the first-type cell in the first cell, so that the RRC layer determines whether a cell simultaneously satisfying the first condition and the third condition exists in the first-type cell of the first cell.

In some embodiments, when the RRC layer of the terminal receives the fourth information, the RRC layer of the terminal determines whether a cell activated from a deactivated state exists in the first-type cell of the first cell, and the RRC layer determines whether a cell with a valid measurement result exists in the first-type cell of the first cell.

In some embodiments, the RRC layer of the terminal determines whether a cell activated from a deactivated state exists in the first-type cell of the first cell.

In some embodiments, the method further includes:
sending, by the MAC layer of the terminal, the first information to the RRC layer; or
sending, by the MAC layer of the terminal, fourth information to the RRC layer according to the first information.

In some embodiments, the first information or the fourth information is used for the RRC layer to determine whether a cell activated from a deactivated state exists in the first-type cell of the first cell.

In some embodiments, the RRC layer of the terminal may determine, according to a measurement result of the first cell, whether a cell with a valid measurement result exists in the first-type cell of the first cell.

It is worth noting that the RRC layer may respectively determine a cell activated from a deactivated state in the first-type cell of the first cell and a cell with a valid measurement result in the first-type cell of the first cell, and take an intersection of the determined cells to determine a cell simultaneously satisfying the first condition and the third condition from the cell satisfying the second condition.

In some embodiments, the RRC layer may first determine whether a cell activated from a deactivated state exists in the first-type cell of the first cell; and in a case where a cell activated from a deactivated state exists in the first-type cell of the first cell, the RRC layer determines whether a cell with a valid measurement result exists in the first-type cell activated from a deactivated state in the first cell.

In some embodiments, the RRC layer may first determine whether a cell with a valid measurement result exists in the first-type cell of the first cell; and in a case where a cell with a valid measurement result exists in the first-type cell of the first cell, the RRC layer determines whether a cell activated from a deactivated state exists in the first-type cell with a valid measurement result in the first cell.

In some embodiments, the method further includes:
sending, by the MAC layer of the terminal or a physical layer of the terminal, seventh information to the RRC layer.

In some embodiments, the seventh information is used to determine whether a cell with a valid measurement result exists.

In some embodiments, the seventh information is used for the RRC layer to determine whether a cell with a valid measurement result exists in the first-type cell of the first cell.

It is worth noting that the seventh information may be auxiliary information to assist the RRC layer in making a judgment. In the process where the RRC layer determines whether a cell satisfying the third condition exists in the first-type cell of the first cell, the MAC layer or the physical layer sends the seventh information to the RRC layer, so that the RRC layer may determine, according to the seventh information, whether a cell with a valid measurement result exists in the first-type cell of the first cell.

Step S2303: the terminal sends a measurement result to the network device.

In some embodiments, in a case where the second cell exists in the first cell, the terminal sends the measurement result to the network device.

In some embodiments, in a case where the second cell exists in the first cell, the terminal sends the measurement result of the second cell to the network device.

In some embodiments, in a case where the second cell exists in the first cell, a radio resource control (RRC) layer of the terminal sends the measurement result of the second cell to the network device.

In some embodiments, when the RRC layer determines that the second cell exists in the first cell, the RRC layer sends the measurement result of the second cell to the network device.

It should be noted that the reported measurement result may be used by the network device for radio resource management, specifically, for scheduling radio resources for terminal communication, etc. Typically, the network device only schedules radio resources of a serving cell to the terminal for wireless communication.

In some embodiments, when sending the measurement result of the second cell to the network device, cell information of the second cell is sent to the network device.

In some embodiments, the cell information of the second cell includes at least one of:
frequency information of the second cell; and
a cell identity of the second cell.

In some embodiments, the frequency information of the second cell may be an absolute radio frequency channel number (ARFCN).

The method for triggering measurement reporting involved in embodiments of the present disclosure may include at least one of steps S2301 to S2303. For example, steps S2301 and S2302 may be implemented as independent embodiments, and step S2301 may be implemented as an independent embodiment, but is not limited to this.

In some embodiments, step S2303 is optional, and one or more of these steps may be omitted or substituted in different embodiments. It may be understood that if the terminal determines that the second cell does not exist in the first cell, it may not send the measurement result to the network device.

In some embodiments, steps S2302 and S2303 are optional, and one or more of these steps may be omitted or substituted in different embodiments. It may be understood that in a case where the first information sent by the network device instructs to deactivate the first cell, the terminal may directly deactivate the first cell, without determining whether the second cell exists in the first cell, and without sending the measurement result to the network device.

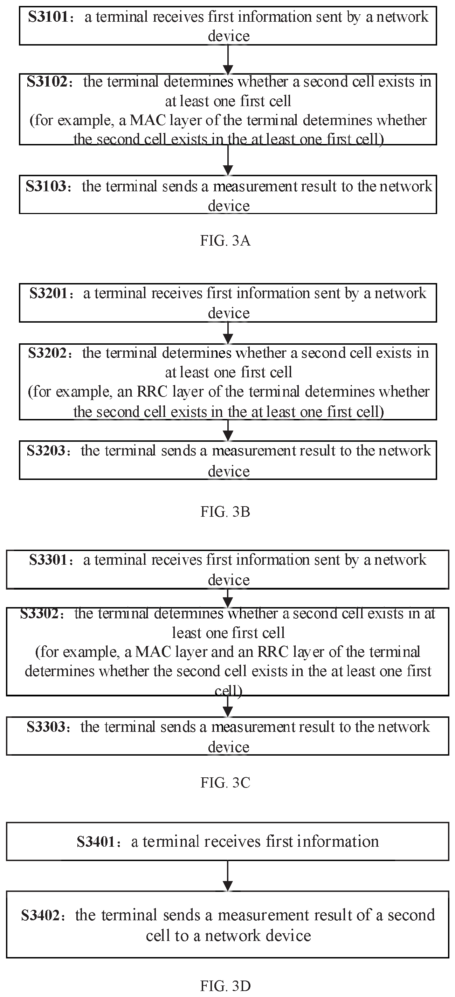

FIG. 3A is a flowchart of a method for triggering measurement reporting according to an illustrative embodiment. As illustrated in FIG. 3A, an embodiment of the present disclosure relates to a method for triggering measurement reporting, executed by a terminal 101, and the method includes the following steps:

Step S3101: the terminal receives first information sent by a network device.

In some embodiments, optional implementations of step S3101 may refer to optional implementations of step S2101 inFIG. 2A and other related parts in the embodiment involving FIG. 2A, which will not be repeated here.

Step S3102: the terminal determines whether a second cell exists in at least one first cell.

In some embodiments, optional implementations of step S3102 may refer to optional implementations of step S2102 in FIG. 2A and other related parts in the embodiment involvingFIG. 2A, which will not be repeated here.

Step S3103: the terminal sends a measurement result to the network device.

In some embodiments, optional implementations of step S3103 may refer to optional implementations of step S2103 inFIG. 2A and other related parts in the embodiment involving FIG. 2A, which will not be repeated here.

The method for triggering measurement reporting involved in embodiments of the present disclosure may include at least one of steps S3101 to S3103. For example, steps S3101 and S3102 may be implemented as independent embodiments, and step S3101 may be implemented as an independent embodiment, but is not limited to this.

In some embodiments, step S3103 is optional, and one or more of these steps may be omitted or substituted in different embodiments. It may be understood that if the terminal determines that the second cell does not exist in the first cell, it may not send the measurement result to the network device.

In some embodiments, steps S3102 and S3103 are optional, and one or more of these steps may be omitted or substituted in different embodiments. It may be understood that in a case where the first information sent by the network device instructs to deactivate the first cell, the terminal may directly deactivate the first cell, without determining whether the second cell exists in the first cell, and without sending the measurement result to the network device.

FIG. 3B is a flowchart of a method for triggering measurement reporting according to an illustrative embodiment. As illustrated in FIG. 3B, an embodiment of the present disclosure relates to a method for triggering measurement reporting, executed by a terminal 101, and the method includes the following steps:

Step S3201: the terminal receives first information sent by a network device.

In some embodiments, optional implementations of step S3201 may refer to optional implementations of step S2101 inFIG. 2A and other related parts in the embodiment involving FIG. 2A, which will not be repeated here.

Step S3202: the terminal determines whether a second cell exists in at least one first cell.

In some embodiments, optional implementations of step S3202 may refer to optional implementations of step S2202 in FIG. 2B and other related parts in the embodiment involving FIG. 2B, which will not be repeated here.

Step S3203: the terminal sends a measurement result to the network device.

In some embodiments, optional implementations of step S3203 may refer to optional implementations of step S2203 in FIG. 2B and other related parts in the embodiment involving FIG. 2B, which will not be repeated here.

The method for triggering measurement reporting involved in embodiments of the present disclosure may include at least one of steps S3201 to S3203. For example, steps S3201 and S3202 may be implemented as independent embodiments, and step S3201 may be implemented as an independent embodiment, but is not limited to this.

In some embodiments, step S3203 is optional, and one or more of these steps may be omitted or substituted in different embodiments. It may be understood that if the terminal determines that the second cell does not exist in the first cell, it may not send the measurement result to the network device.

In some embodiments, steps S3202 and S3203 are optional, and one or more of these steps may be omitted or substituted in different embodiments. It may be understood that in a case where the first information sent by the network device instructs to deactivate the first cell, the terminal may directly deactivate the first cell, without determining whether the second cell exists in the first cell, and without sending the measurement result to the network device.

FIG. 3C is a flowchart of a method for triggering measurement reporting according to an illustrative embodiment. As illustrated in FIG. 3C, an embodiment of the present disclosure relates to a method for triggering measurement reporting, executed by a terminal 101, and the method includes the following steps:

Step S3301: the terminal receives first information sent by a network device.

In some embodiments, optional implementations of step S3301 may refer to optional implementations of step S2101 inFIG. 2A and other related parts in the embodiment involving FIG. 2A, which will not be repeated here.

Step S3302: the terminal determines whether a second cell exists in at least one first cell.

In some embodiments, optional implementations of step S3302 may refer to optional implementations of step S2302 in FIG. 2C and other related parts in the embodiment involving FIG. 2C, which will not be repeated here.

Step S3303: the terminal sends a measurement result to the network device.

In some embodiments, optional implementations of step S3303 may refer to optional implementations of step S2303 in FIG. 2C and other related parts in the embodiment involving FIG. 2C, which will not be repeated here.

The method for triggering measurement reporting involved in embodiments of the present disclosure may include at least one of steps S3301 to S3303. For example, steps S3301 and S3302 may be implemented as independent embodiments, and step S3301 may be implemented as an independent embodiment, but is not limited to this.

In some embodiments, step S3303 is optional, and one or more of these steps may be omitted or substituted in different embodiments. It may be understood that if the terminal determines that the second cell does not exist in the first cell, it may not send the measurement result to the network device.

In some embodiments, steps S3302 and S3303 are optional, and one or more of these steps may be omitted or substituted in different embodiments. It may be understood that in a case where the first information sent by the network device instructs to deactivate the first cell, the terminal may directly deactivate the first cell, without determining whether the second cell exists in the first cell, and without sending the measurement result to the network device.

FIG. 3D is a flowchart of a method for triggering measurement reporting according to an illustrative embodiment. As illustrated in FIG. 3D, an embodiment of the present disclosure relates to a method for triggering measurement reporting, executed by a terminal 101, and the method includes the following steps:

Step S3401: the terminal receives first information.

In some embodiments, the first information is used to instruct to activate or deactivate at least one first cell.

Step S3402: the terminal sends a measurement result of a second cell to a network device.

In some embodiments, in a case where the second cell exists in the at least one first cell, the terminal sends the measurement result of the second cell to the network device.

In some embodiments, the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

In some embodiments, the method further includes:
determining, by a medium access control (MAC) layer of the terminal, whether the second cell exists in the first cell;
in a case where the second cell exists in the first cell, sending, by the MAC layer of the terminal, second information to a radio resource control (RRC) layer of the terminal, in which the second information indicates at least one of: the second cell exists in the first cell; the RRC layer triggers reporting of the measurement result; or an index or an index list of the second cell; and
in a case where the second cell exists in the first cell, sending the measurement result of the second cell to the network device includes:
in a case where the RRC layer of the terminal receives the second information, sending the measurement result of the second cell to the network device.

In some embodiments, the index of the second cell is a serving cell identity.

In some embodiments, determining, by the medium access control (MAC) layer of the terminal, whether the second cell exists in the first cell includes:
determining, by the MAC layer according to the first information, whether a third cell exists in the first cell, in which the third cell is a cell in the first cell switching from a deactivated state to an activated state;
in a case where the third cell exists in the first cell, determining, by the MAC layer, whether the first-type cell in the first frequency range exists in the third cell; and
in a case where the first-type cell exists in the third cell, determining, by the MAC layer according to a measurement result of the first cell, whether a cell with a valid measurement result exists in the first-type cell of the third cell.

In some embodiments, the method further includes:
determining, by an RRC layer of the terminal, whether the second cell exists in the first cell; and
in a case where the second cell exists in the first cell, sending the measurement result of the second cell to the network device includes:
in a case where the second cell exists in the first cell, sending, by the RRC layer, the measurement result of the second cell to the network device.

In some embodiments, the method further includes:
sending, by the MAC layer of the terminal, the first information to the RRC layer; or
sending, by the MAC layer of the terminal, third information to the RRC layer according to the first information, in which the third information indicates a third cell, and the third cell is a cell in the first cell switching from a deactivated state to an activated state.

In some embodiments, the method further includes:
determining, by the MAC layer of the terminal according to the first information, whether a third cell exists in the first cell, in which the third cell is a cell in the first cell switching from a deactivated state to an activated state;
sending, by the MAC layer of the terminal, third information to the RRC layer of the terminal, in which the third information indicates the third cell; and
determining, by the RRC layer of the terminal, whether the second cell exists in the first cell includes:
in a case where the RRC receives the third information, determining, by the RRC layer, whether the first-type cell in the first frequency range exists in the third cell; and
in a case where the first-type cell exists in the third cell, determining, by the RRC layer, whether a cell with a valid measurement result exists in the first-type cell of the third cell.

In some embodiments, the method further includes:
determining, by the MAC layer of the terminal, whether the first-type cell in the first frequency range exists in the first cell;
in a case where the first-type cell exists in the first cell, sending, by the MAC layer, fourth information to the RRC layer of the terminal, in which the fourth information indicates the first-type cell in the first cell; and
determining, by the RRC layer of the terminal, whether the second cell exists in the first cell includes:
determining, by the RRC layer, whether a cell activated from a deactivated state exists in the first-type cell of the first cell; and determining, by the RRC layer, whether a cell with a valid measurement result exists in the first-type cell of the first cell.

In some embodiments, the method further includes:
determining, by the MAC layer of the terminal according to the first information, whether a third cell exists in the first cell, in which the third cell is a cell in the first cell switching from a deactivated state to an activated state;
determining, by the MAC layer, whether a first-type cell in a first frequency range exists in the third cell;
in a case where the first-type cell exists in the third cell, sending, by the MAC layer, fifth information to the RRC layer of the terminal, in which the fifth information indicates the first-type cell in the third cell; and
determining, by the RRC layer of the terminal, whether the second cell exists in the first cell includes:
determining, by the RRC layer, whether a cell with a valid measurement result exists in the first-type cell of the third cell.

In some embodiments, the method further includes:
sending, by the MAC layer of the terminal or a physical layer of the terminal, sixth information to the RRC layer, in which the sixth information is used for the RRC layer to determine the first-type cell in the first frequency range; and/or
sending, by the MAC layer of the terminal or a physical layer of the terminal, seventh information to the RRC layer, in which the seventh information is used for the RRC layer to determine presence of a cell with a valid measurement result.

In some embodiments, the method further includes:
receiving, by the MAC layer, a physical layer indication of the terminal,
in which the physical layer indication is used to determine at least one of:
whether the first-type cell in the first frequency range exists in the first cell or the third cell; or
whether a cell with a valid measurement result exists in the first cell or the third cell.

In some embodiments, the method further includes:
when sending the measurement result of the second cell to the network device, sending cell information of the second cell to the network device,
in which the cell information of the second cell includes at least one of:
frequency information of the second cell; and
a cell identity of the second cell.

In some embodiments, the first information may be carried in a medium access control (MAC) control element (CE).

In some embodiments, the first frequency range includes a frequency range FR2.

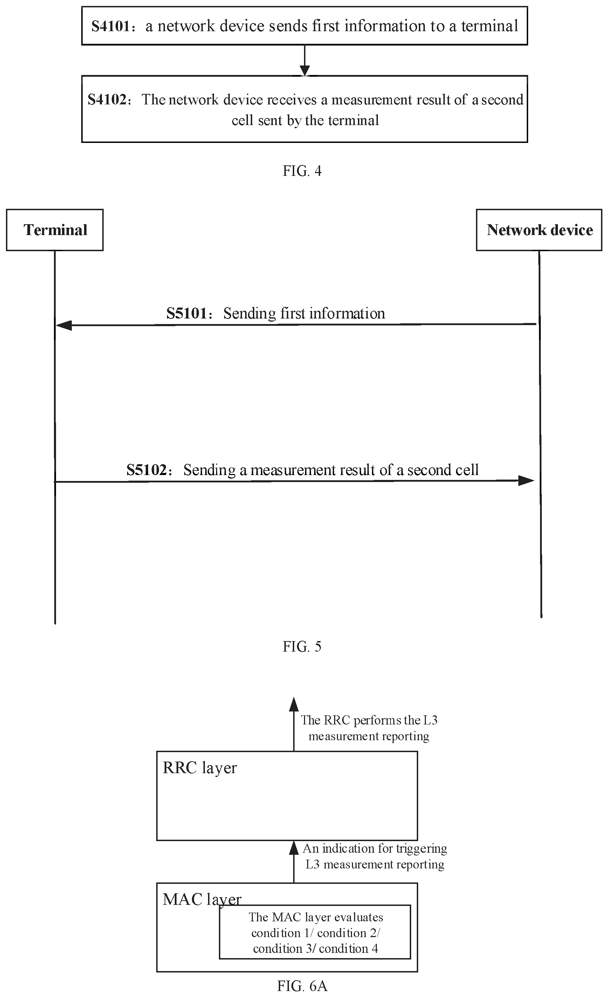

FIG. 4 is a flowchart of a method for triggering measurement reporting according to an illustrative embodiment. As illustrated in FIG. 4, an embodiment of the present disclosure relates to a method for triggering measurement reporting, executed by a network device 102, and the method includes the following step:

Step S4101: a network device sends first information to a terminal.

In some embodiments, optional implementations of step S4101 may refer to optional implementations of step S2101 inFIG. 2A and other related parts in the embodiment involving FIG. 2A, which will not be repeated here.

FIG. 5 is an interaction diagram of a method for triggering measurement reporting according to an illustrative embodiment. As illustrated in FIG. 5, an embodiment of the present disclosure relates to a method for triggering measurement reporting, used in a communication system 100, and the method includes one of the following steps:

Step S5101: the terminal receives first information sent by a network device.

In some embodiments, the first information is used to instruct to activate or deactivate a first cell.

Step S5102: the terminal sends a measurement result of a second cell to a network device.

In some embodiments, in a case where the second cell exists in the at least one first cell, the terminal sends the measurement result of the second cell to the network device.

In some embodiments, the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

In some embodiments, the above method may include the methods of the above communication system side, terminal side, access network device side, core network device side, etc., which will not be repeated here.

An embodiment of the present disclosure provides an information processing method for a MAC layer and an RRC layer during an SCell activation process, which effectively triggers L3 measurement reporting, avoids unnecessary measurement reporting, reduces air interface signaling, improves spectrum efficiency, and effectively saves UE power.

Scheme 1: L2 makes a judgment to trigger a valid measurement report.

When a UE receives a secondary cell activation/deactivation instruction (SCell Activation/Deactivation MAC CE) or an enhanced secondary cell activation/deactivation instruction (Enhanced SCell Activation/Deactivation MAC CE):

Option 1: The MAC layer judges the following conditions:
an FR2 SCell is activated from a deactivated state.
the FR2 SCell is an unknown cell.
a valid measurement result exists, where the valid measurement result refers to the measurement result of the target FR2 SCell (i.e., the FR2 SCell activated from a deactivated state and being an unknown cell), or a measurement result for a frequency layer where the target FR2 SCell is located.

Option 2: The MAC layer judges the following conditions:
an FR2 SCell is activated from a deactivated state.

Based on a physical layer indication, FR2 is an unknown cell.

Based on a physical layer indication, it is known that a valid measurement result exists, where the valid measurement result refers to the measurement result of the target FR2 SCell (i.e., the FR2 SCell activated from a deactivated state and being an unknown cell), or a measurement result for a frequency layer where the target FR2 SCell is located.

If the above conditions are satisfied, the MAC layer notifies a higher layer to trigger L3 measurement result reporting. Optionally, it also indicates an ARFCN of the target FR frequency layer. The L3 measurement result reporting is a measurement reporting in which a report type (reportType) in a measurement is set to report on activation (reportOnActivation).

As illustrated in FIG. 6A, FIG. 6A is a first schematic diagram of information interaction between a MAC layer and an RRC layer during an SCell activation process according to an illustrative embodiment. Herein, condition 1: at least one SCell is activated from a deactivated state; condition 2: the SCell satisfying condition 1 is an FR2 cell; condition 3: the SCell satisfying condition 1 or condition 2 is an FR2 unknown cell; condition 4: the FR2 SCell satisfying condition 1/2 has a valid L3 measurement result after the SCell activation command.

Scheme 2: L2 and L3 make a judgment to trigger a valid measurement report.

When a UE receives a secondary cell activation/deactivation instruction (SCell Activation/Deactivation MAC CE) or an enhanced secondary cell activation/deactivation instruction (Enhanced SCell Activation/Deactivation MAC CE):

The MAC layer judges the following conditions:
an FR2 SCell is activated from a deactivated state; or an SCell is activated from a deactivated state; or an FR2 unknown SCell is activated from a deactivated state.

If the above conditions are satisfied, the MAC layer notifies a higher layer that an FR2 cell is activated from a deactivated state; or an SCell is activated from a deactivated state; or an FR2 unknown SCell is activated from a deactivated state; or triggers L3 measurement result reporting, optionally also indicates an ARFCN of the target FR frequency layer, and/or a list of SCells satisfying condition 1.

After the RRC layer receives the above indication from the MAC layer, the RRC judges the following conditions:
the SCell is an FR2 unknown cell, or the FR2 SCell is an unknown cell.
a valid measurement result exists, where the valid measurement result refers to the measurement result of the target FR2 SCell (i.e., the FR2 SCell activated from a deactivated state and being an unknown cell), or a measurement result for a frequency layer where the target FR2 SCell is located.

If all the above conditions are satisfied, the RRC layer triggers L3 measurement reporting. The L3 measurement result reporting is a measurement reporting in which a report type (reportType) in a measurement is set to report on activation (reportOnActivation).

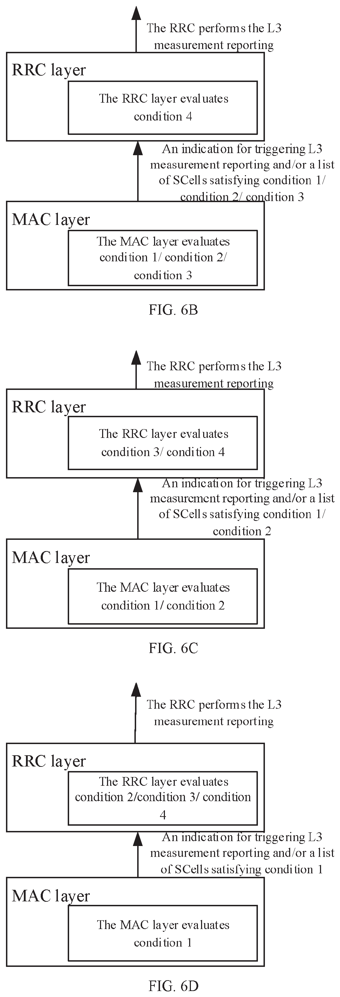

As illustrated in FIG. 6B, FIG. 6C, and FIG. 6D, FIG. 6B is a second schematic diagram of information interaction between a MAC layer and an RRC layer during an SCell activation process according to an illustrative embodiment; FIG. 6C is a third schematic diagram of information interaction between a MAC layer and an RRC layer during an SCell activation process according to an illustrative embodiment; and FIG. 6D is a fourth schematic diagram of information interaction between a MAC layer and an RRC layer during an SCell activation process according to an illustrative embodiment. Herein, condition 1: at least one SCell is activated from a deactivated state; condition 2: the SCell satisfying condition 1 is an FR2 cell; condition 3: the SCell satisfying condition 1 or condition 2 is an FR2 unknown cell; condition 4: the FR2 SCell satisfying condition 1/2 has a valid L3 measurement result after the SCell activation command.

Scheme 3: L3 makes a judgment to trigger a valid measurement report. When a UE receives a secondary cell activation/deactivation instruction (SCell Activation/Deactivation MAC CE) or an enhanced secondary cell activation/deactivation instruction (Enhanced SCell Activation/Deactivation MAC CE):

The MAC layer reports the MAC CE to the RRC layer; or the MAC layer notifies the RRC layer of a bit part of SCell activation/deactivation.

After the RRC layer receives the above indication from the MAC layer, the RRC judges the following conditions:
an FR2 SCell is activated from a deactivated state;
the FR2 SCell is an unknown cell; and
a valid measurement result exists, where the valid measurement result refers to the measurement result of the target FR2 SCell (i.e., the FR2 SCell activated from a deactivated state and being an unknown cell), or a measurement result for a frequency layer where the target FR2 SCell is located.

If all the above conditions are satisfied, the RRC layer triggers L3 measurement reporting. The L3 measurement result reporting is a measurement reporting in which a report type (reportType) in a measurement is set to report on activation (reportOnActivation).

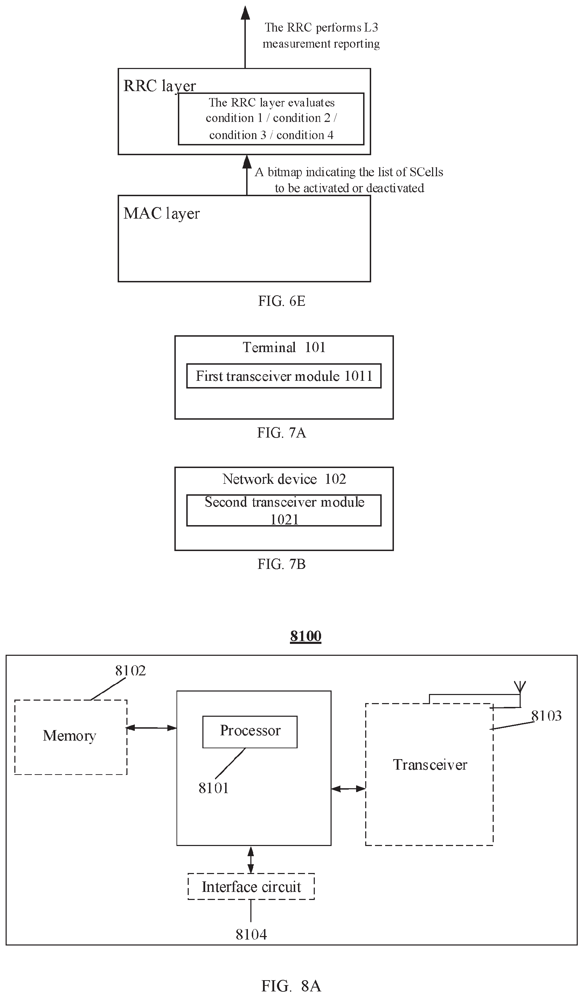

As illustrated in FIG. 6E, FIG. 6E is a fifth schematic diagram of information interaction between a MAC layer and an RRC layer during an SCell activation process according to an illustrative embodiment.

Herein, condition 1: at least one SCell is activated from a deactivated state; condition 2: the SCell satisfying condition 1 is an FR2 cell; condition 3: the SCell satisfying condition 1 or condition 2 is an FR2 unknown cell; condition 4: the FR2 SCell satisfying condition 1 or condition 2 has a valid L3 measurement result after the SCell activation command.

Embodiments of the present disclosure also provide an apparatus for implementing any of the above methods, for example, an apparatus including a unit or a module for implementing steps performed by a terminal in any of the above methods is provided. For another example, another apparatus is provided, including units or modules for implementing the steps performed by a network device (e.g., an access network device, or a core network device, etc.) in any of the above methods.

It should be understood that the division of units or modules in the above apparatus is only a division of logical functions. In actual implementation, they may be fully or partially integrated into one physical entity, or may be physically separate. Additionally, the units or modules in the apparatus may be implemented in the form of software called by a processor. For example, the apparatus includes a processor connected to a memory storing instructions. The processor calls the instructions stored in the memory to implement any of the above methods or the functions of the units/modules of the apparatus. The processor may be a general-purpose processor, such as a Central Processing Unit (CPU) or a microprocessor, and the memory may be internal or external to the apparatus. Alternatively, the units or modules in the apparatus may be implemented in the form of hardware circuits. The functions of some or all units/modules may be realized by designing the hardware circuit. The hardware circuit may be understood as one or more processors. For example, in one implementation, the hardware circuit is an Application-Specific Integrated Circuit (ASIC), realizing the functions of some or all units/modules by designing the logical relationships among circuit components. In another implementation, the hardware circuit may be implemented using a Programmable Logic Device (PLD). Taking a Field Programmable Gate Array (FPGA) as an example, it may include a large number of logic gates. The connection relationships between the logic gates are configured via configuration files to realize the functions of some or all units/modules. All units or modules of the above apparatus may be implemented entirely via software called by a processor, or entirely via hardware circuits, or partially via software called by a processor and the remaining part via hardware circuits.

In embodiments of the present disclosure, the processor is a circuit having signal processing capabilities, and in an implementation, the processor may be a circuit having instruction reading and running capabilities, such as a central processing unit (CPU), a microprocessor, a graphics processing unit (GPU) (which may be understood as a microprocessor), or a digital signal processor (DSP), etc.; in another implementation, the processor may implement certain functions through the logical relationship of hardware circuits that are fixed or reconfigurable, for example, the processor is a hardware circuit implemented by an application-specific integrated circuit (ASIC) or a programmable logic device (PLD), such as an FPGA. In the reconfigurable hardware circuit, the process in which the processor loads a configuration document to implement the configuration of the hardware circuit may be understood as the process in which the processor loads instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), and the like.

FIG. 7A is a schematic block diagram of a terminal according to an illustrative embodiment. As illustrated in FIG. 7A, a terminal 101 includes: a first transceiver module 1011 configured to receive first information; and in a case where a second cell exists in the at least one first cell, send a measurement result of the second cell to a network device; the first information is used to instruct to activate or deactivate at least one first cell; the second cell is a cell in the first cell satisfying two or more of the following conditions: the first information instructs the second cell to switch from a deactivated state to an activated state; the second cell is a first-type cell in a first frequency range; and the measurement result of the second cell is valid. Optionally, the first transceiver module 1011 is configured to perform steps related to information sending and receiving performed by the terminal in any of the above methods for triggering measurement reporting, which will not be repeated here. Optionally, the terminal 101 further includes a processing module, and the above processing module is configured to perform steps related to information processing performed by the terminal in any of the above methods, which will not be repeated here.

FIG. 7B is a schematic block diagram of a network device according to an illustrative embodiment. As illustrated in FIG. 7B, a network device 102 includes: a second transceiver module 1021 configured to send first information to a terminal; and receive a measurement result of a second cell sent by the terminal; in which the first information is used to instruct to activate or deactivate at least one first cell; the second cell is a cell in the first cell satisfying two or more of the following conditions: the first information instructs the second cell to switch from a deactivated state to an activated state; the second cell is a first-type cell in a first frequency range; and the measurement result of the second cell is valid. Optionally, the second transceiver module 1021 is configured to perform steps related to information sending and receiving performed by the network device in any of the above methods for triggering measurement reporting, which will not be repeated here. Optionally, the network device 102 further includes a processing module, and the above processing module is configured to perform steps related to information processing performed by the network device in any of the above methods, which will not be repeated here.

FIG. 8A is a schematic block diagram of a communication device 8100 according to an illustrative embodiment. The communication device 8100 may be a network device (e.g., a access network device, or a core network device), a terminal (e.g., a user equipment), a chip, a chip system, or a processor, etc. that supports the network device to realize the above-described method, or a chip, a chip system, or a processor, etc. that supports the terminal device to realize the above-described method for triggering measurement reporting. The communication device 8100 may be used to implement the methods for triggering measurement reporting described in the method embodiments described above, details of which may be found in the description of the method embodiments described above.

As illustrated in FIG. 8A, the communication device 8100 includes one or more processors 8101. The processor 8101 may be a general-purpose processor, a dedicated processor, or the like, and may be, for example, a baseband processor or a central processing unit. The baseband processor may be used to process a communication protocol and communication data, and the central processor may be used to control the communication device (e.g., a base station, a baseband chip, a terminal device, a terminal device chip, a DU, or a CU, etc.), execute programs, and process program data. The processor 8101 is configured to invoke instructions to cause the communication device 8100 to perform any of the above communication methods.

In some embodiments, the communication device 8100 further includes one or more memories 8102 for storing instructions. Optionally, all or part of the memory 8102 may also be outside the communication device 8100.

In some embodiments, the communication device 8100 further includes one or more transceivers 8103. In a case where the communication device 8100 includes one or more transceivers 8103, the communication steps, such as transmitting and receiving in the above method, are performed by the transceiver 8103, and other steps are performed by the processor 8101.

In some embodiments, the transceiver may include a receiver and a transmitter, which may be separate or integrated together. Optionally, terms such as a transceiver, a transceiver unit, a transceiving machine, and a transceiver circuit may be mutually replaced, terms such as a transmitter, a transmitter unit, a transceiving machine, and a transmitter circuit may be mutually replaced, and terms such as a receiver, a receiving unit, a receiving machine, and a receiving circuit may be mutually replaced.

Optionally, the communication device 8100 further includes one or more interface circuits 8104 connected to the memory 8102, and the interface circuits 8104 may be used to receive signals from the memory 8102 or other devices, and may be used to transmit signals to the memory 8102 or other devices. For example, the interface circuit 8104 may read instructions stored in the memory 8102 and transmit the instructions to the processor 8101.

The communication device 8100 in the above description of embodiments may be a network device or a terminal device, but the scope of the communication device 8100 described in the present disclosure is not limited to this, and the structure of the communication device 8100 may not be limited by FIG. 8A. The communication device may be a stand-alone device or may be part of a larger device. For example, the communication device may be: 1) a stand-alone integrated circuit IC, or a chip, or a chip system or subsystem; (2) a set having one or more ICs, optionally, the set of ICs may also include storage components for storing data, programs; (3) an ASIC, such as a Modem; (4) modules that may be embedded in other devices; (5) receivers, terminal devices, intelligent terminal devices, cellular phones, wireless devices, handsets, mobile units, vehicle devices, network devices, cloud devices, artificial intelligence devices, etc.; (6) Other devices, etc.

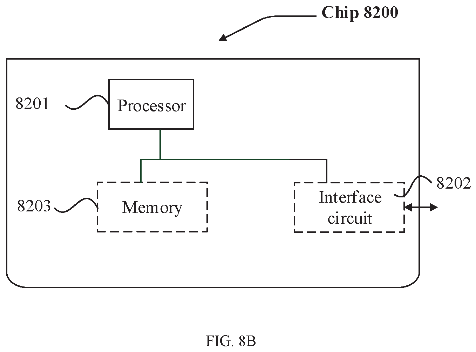

FIG. 8B is a schematic block diagram of a chip 8200 illustrated according to an illustrative embodiment. In a case where the communication device 8100 may be a chip or a chip system, reference may be made to the schematic structural diagram of the chip 8200 illustrated in FIG. 8B, which is not limited to this.

The chip 8200 includes one or more processors 8201 for invoking instructions to cause the chip 8200 to perform any of the above communication methods.

In some embodiments, the chip 8200 further includes one or more interface circuits 8202 connected to the memory 8203, the interface circuit 8202 may be used to receive signals from the memory 8203 or other devices, and the interface circuit 8202 may be used to transmit signals to the memory 8203 or other devices. For example, the interface circuit 8202 may read instructions stored in the memory 8203 and transmit the instructions to the processor 8201. Optionally, terms such as interface circuit, interface, transceiver pin, transceiver, and the like may be replaced with each other.

In some embodiments, the chip 8200 further includes one or more memories 8203 for storing instructions. Optionally, all or part of the memory 8203 may be outside the chip 8200.

The present disclosure also provides a storage medium having instructions stored thereon that, when the instructions are executed on the communication device 8100, cause the communication device 8100 to perform any of the above methods. Optionally, the storage medium is an electronic storage medium. Optionally, the storage medium is a computer-readable storage medium, or may also be a storage medium readable by another device. Optionally, the storage medium may be a non-transitory storage medium, or may also be a transitory storage medium.

The present disclosure also provide a program product that, when executed by the communication device 8100, causes the communication device 8100 to perform any of the above communication methods. Optionally, the program product is a computer program product.

The present disclosure also provide a computer program that, when run on a computer, causes the computer to perform any of the above communication methods.

Other embodiments of the present disclosure will readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as illustrative only, with the true scope and spirit of the present disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. A method for triggering measurement reporting, comprising:
receiving, by a terminal, first information, wherein the first information is used to instruct to activate or deactivate a first cell; and
in a case where a second cell exists in the first cell, sending a measurement result of the second cell to a network device,
wherein the second cell satisfies two or more of the following conditions:
the first information instructs the second cell to switch from a deactivated state to an activated state;
the second cell is a first-type cell in a first frequency range; or
the measurement result of the second cell is valid.

2. The method according to claim 1, further comprising:
determining, by a medium access control (MAC) layer of the terminal, whether the second cell exists in the first cell;
in a case where the second cell exists in the first cell, sending, by the MAC layer of the terminal, second information to a radio resource control (RRC) layer of the terminal, wherein the second information indicates at least one of: the second cell exists in the first cell; the RRC layer triggers reporting of the measurement result; or an index or an index list of the second cell; and
in a case where the second cell exists in the first cell, sending the measurement result of the second cell to the network device comprises:
in a case where the RRC layer of the terminal receives the second information, sending the measurement result of the second cell to the network device.

3. The method according to claim 2, wherein the index of the second cell is a serving cell identity.

4. The method according to claim 2 or 3, wherein determining, by the MAC layer of the terminal, whether the second cell exists in the first cell comprises:
determining, by the MAC layer according to the first information, whether a third cell exists in the first cell, wherein the third cell is a cell in the first cell switching from a deactivated state to an activated state;
in a case where the third cell exists in the first cell, determining, by the MAC layer, whether the first-type cell in the first frequency range exists in the third cell; and
in a case where the first-type cell exists in the third cell, determining, by the MAC layer according to a measurement result of the first cell, whether a cell with a valid measurement result exists in the first-type cell.

5. The method according to claim 1, further comprising:
determining, by an RRC layer of the terminal, whether the second cell exists in the first cell; and
in a case where the second cell exists in the first cell, sending the measurement result of the second cell to the network device comprises:
in a case where the second cell exists in the first cell, sending, by the RRC layer, the measurement result of the second cell to the network device.

6. The method according to claim 5, further comprising:
sending, by the MAC layer of the terminal, the first information to the RRC layer; or
sending, by the MAC layer of the terminal, third information to the RRC layer according to the first information, wherein the third information indicates a third cell, and the third cell is a cell in the first cell switching from a deactivated state to an activated state.

7. The method according to claim 5, further comprising:
determining, by the MAC layer of the terminal according to the first information, whether a third cell exists in the first cell, wherein the third cell is a cell in the first cell switching from a deactivated state to an activated state;
sending, by the MAC layer of the terminal, third information to the RRC layer of the terminal, wherein the third information indicates the third cell; and
determining, by the RRC layer of the terminal, whether the second cell exists in the first cell comprises:
in a case where the RRC receives the third information, determining, by the RRC layer, whether the first-type cell in the first frequency range exists in the third cell; and
in a case where the first-type cell exists in the third cell, determining, by the RRC layer, whether a cell with a valid measurement result exists in the first-type cell.

8. The method according to claim 5, further comprising:
determining, by the MAC layer of the terminal, whether the first-type cell in the first frequency range exists in the first cell;
in a case where the first-type cell exists in the first cell, sending, by the MAC layer, fourth information to the RRC layer of the terminal, wherein the fourth information indicates the first-type cell in the first cell; and
determining, by the RRC layer of the terminal, whether the second cell exists in the first cell comprises:
determining, by the RRC layer, whether a cell activated from a deactivated state exists in the first-type cell of the first cell; and determining, by the RRC layer, whether a cell with a valid measurement result exists in the first-type cell of the first cell.

9. The method according to claim 5, further comprising:
determining, by the MAC layer of the terminal according to the first information, whether a third cell exists in the first cell, wherein the third cell is a cell in the first cell switching from a deactivated state to an activated state;
determining, by the MAC layer, whether the first-type cell in the first frequency range exists in the third cell;
in a case where the first-type cell exists in the third cell, sending, by the MAC layer, fifth information to the RRC layer of the terminal, wherein the fifth information indicates the first-type cell in the third cell; and
determining, by the RRC layer of the terminal, whether the second cell exists in the first cell comprises:
determining, by the RRC layer, whether a cell with a valid measurement result exists in the first-type cell of the third cell.

10. The method according to any one of claims 6 to 9, further comprising:
sending, by the MAC layer of the terminal or a physical layer of the terminal, sixth information to the RRC layer, wherein the sixth information is used for the RRC layer to determine the first-type cell in the first frequency range; and/or
sending, by the MAC layer of the terminal or a physical layer of the terminal, seventh information to the RRC layer, wherein the seventh information is used for the RRC layer to determine presence of a cell with a valid measurement result.

11. The method according to claim 4 or 8, further comprising:
receiving, by the MAC layer, a physical layer indication of the terminal, wherein the physical layer indication is used to determine at least one of:
whether the first-type cell in the first frequency range exists in the first cell or the third cell; or
whether a cell with a valid measurement result exists in the first cell or the third cell.

12. The method according to any one of claims 1 to 11, further comprising:
when sending the measurement result of the second cell to the network device, sending cell information of the second cell to the network device,
wherein the cell information of the second cell comprises at least one of:
frequency information of the second cell; or
a cell identity of the second cell.

13. The method according to any one of claims 1 to 12, wherein the first information is carried in a medium access control (MAC) control element (CE).

14. The method according to any one of claims 1 to 13, wherein the first frequency range comprises a frequency range FR2.

15. A method for triggering measurement reporting, comprising:
sending, by a network device, first information to a terminal, wherein the first information is used to instruct to activate or deactivate at least one first cell; and
receiving, by the network device, a measurement result of a second cell sent by the terminal.
wherein the second cell is a cell in the first cell satisfying two or more of the following conditions:
wherein the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

16. A terminal, comprising:
a first transceiver module configured to receive first information, and in a case where a second cell exists in at least one first cell, send a measurement result of the second cell to a network device, wherein the first information is used to instruct to activate or deactivate the at least one first cell,
and the second cell satisfies two or more of the following conditions:
the first information instructs the second cell to switch from a deactivated state to an activated state;
the second cell is a first-type cell in a first frequency range; or
the measurement result of the second cell is valid.

17. A network device, comprising:
a second transceiver module configured to send first information to a terminal, and receive a measurement result of a second cell sent by the terminal, wherein the first information is used to instruct to activate or deactivate at least one first cell,
wherein the second cell is a cell in the first cell satisfying two or more of the following conditions:
the first information instructs the second cell to switch from a deactivated state to an activated state;
the second cell is a first-type cell in a first frequency range; or
the measurement result of the second cell is valid.

18. A communication system comprising a terminal and a network device, wherein the terminal is configured to implement the method for triggering measurement reporting according to any one of claims 1 to 14, and the network device is configured to implement the method for triggering measurement reporting according to claim 15.

19. A communication device, comprising:
one or more processors,
wherein the one or more processor are configured to call instructions to cause the communication device to perform the method for triggering measurement reporting according to any one of claims 1 to 14 or according to claim 15.

20. A storage medium storing instructions that, when executed by a communication device, cause the communication device to perform the method for triggering measurement reporting according to any one of claims 1 to 14 or according to claim 15.
